# EUROPÄISCHE PATENTSCHRIFT

(11) **EP 4 194 142 B1**
(45) Veröffentlichungstag und Bekanntmachung des Hinweises auf die Patenterteilung: **13.08.2025**
(21) Anmeldenummer: 22211452.2
(22) Anmeldetag: 05.12.2022
(51) Int. Cl.: B23Q 1/00, B22F 12/30, B33Y 30/00

(54) **BASISEINHEIT ZUM LÖSBAREN FIXIEREN VON WERKSTÜCKTRÄGERN**
BASE UNIT FOR DETACHABLE FIXING OF WORKPIECE CARRIERS
UNITÉ DE BASE POUR LA FIXATION AMOVIBLE DE PORTE-PIÈCES

(30) Priorität: 10.12.2021 DE 102021132668
(43) Veröffentlichungstag der Anmeldung: 14.06.2023
(73) Patentinhaber: Andreas Maier GmbH & Co. KG, 70734 Fellbach (DE)
(72) Erfinder: Widmer, Karl, 70437 Stuttgart (DE); Derrez, Christian, 71364 Winnenden (DE)
(74) Vertreter: Hoeger, Stellrecht & Partner Patentanwälte mbB

(56) Entgegenhaltungen:
- EP-A1- 2 613 902
- DE-C1- 4 139 522
- US-A- 4 502 656
- US-A1- 2004 256 780
- US-A1- 2020 189 051

## Beschreibung

Die vorliegende Erfindung betrifft eine Basiseinheit zum lösbaren Fixieren von Werkstückträgern, welche jeweils mindestens einen Einspannbolzen umfassen. Solche Werkstückträger sind insbesondere zur Verwendung bei 3D-Druckverfahren vorgesehen, wobei dann die zu druckenden Werkstücke an der der Basiseinheit abgewandten Oberseite jeweils eines Werkstückträgers gebildet werden.

Bei sogenannten Hybridverfahren kann ein solcher Werkstückträger bereits einen Teil eines Werkstücks umfassen, welcher in einem anderen Herstellungsprozess hergestellt worden ist.

Die EP 2 613 902 A1 offenbart eine Basiseinheit zum lösbaren Fixieren von Werkstückträgern gemäß dem Oberbegriff von Anspruch 1.

Der vorliegenden Erfindung liegt die Aufgabe zugrunde, eine Basiseinheit zum lösbaren Fixieren von Werkstückträgern, welche jeweils mindestens einen Einspannbolzen umfassen, zu schaffen, die es ermöglicht, rasch und zuverlässig aus einer Mehrzahl von Werkstückträgern an der Oberseite der Basiseinheit eine Werkstücktragestruktur zu schaffen, welche eine Gesamt-Werkstücktragefläche einer gewünschten Form und Größe aufweist.

Diese Aufgabe wird erfindungsgemäß durch eine Basiseinheit gemäß Anspruch gelöst.

Die Basiseinheit umfasst Folgendes:
eine Grundplatte,
eine Deckplatte, welche mit Deckplatten-Durchtrittsöffnungen versehen ist,
durch die jeweils ein Einspannbolzen eines Werkstückträgers hindurchtreten kann,
ein Fixierelement, welches mit Fixierelement-Durchtrittsöffnungen versehen ist, durch die jeweils ein Einspannbolzen eines Werkstückträgers hindurchtreten kann, und mittels welchem mindestens ein Einspannbolzen eines Werkstückträgers an der Basiseinheit fixierbar ist, wenn das Fixierelement sich in einer Arbeitsstellung befindet, und
eine Bewegungsvorrichtung zum Bewegen des Fixierelements von einer Ruhestellung in die Arbeitsstellung und/oder von der Arbeitsstellung in die Ruhestellung.

Die vorliegende Erfindung ermöglicht es, eine Mehrzahl von Werkstückträgern, die an der Oberseite der Deckplatte der Basiseinheit angeordnet sind, in einfacher, rascher und zuverlässiger Weise gleichzeitig an der Basiseinheit zu verriegeln beziehungsweise von der Basiseinheit zu entriegeln.

Die erfindungsgemäße Basiseinheit eignet sich zur Verwendung bei allen Anwendungen, bei denen ein Werkstück mit mäßigen Haltekräften in seiner Position fixiert werden muss, beispielsweise in einer Messmaschine, in einer Schleifmaschine oder in einer Fräsmaschine.

Ferner eignet sich die erfindungsgemäße Basiseinheit insbesondere zur Verwendung in einem 3D-Druckverfahren zur additiven Herstellung eines Werkstücks.

Dabei kann es sich insbesondere um ein Metall-3D-Druckverfahren handeln.

Die mehreren Werkstückträger, die an der Oberseite der Deckplatte der Basiseinheit angeordnet sein können, können vorzugsweise einzeln von der Deckplatte entfernt und in einem auf das 3D-Druckverfahren folgenden Bearbeitungsprozess weiter verwendet werden.

Die mehreren Werkstückträger können auch vor der Fixierung an der Basiseinheit in vorausgehenden Bearbeitungsprozessen verwendet worden sein.

Um hybride Werkstücke positioniergenau herstellen zu können, eignet sich die hier beschriebene Erfindung ebenfalls. Es können sowohl konventionell (durch Fräsen, Drehen etc.) gefertigte Grundkörper, welche in einem nachfolgenden Prozess im 3D-Druckverfahren weiter aufgebaut werden, als auch erst im 3D-Druckverfahren auf die Trägerplatte (den Werkstückträger) aufgebaute Bauteile, die im Nachgang durch Auftragschweißen weiter gefertigt werden, aufgespannt werden.

Die Deckplatten-Durchtrittsöffnungen der Deckplatte der Basiseinheit sind vorzugsweise als Passbohrungen ausgebildet, welche passgenau komplementär zu einem Zentrierbund eines Einspannbolzens eines Werkstückträgers ausgebildet sind, so dass durch das Zusammenwirken des Einspannbolzens und der jeweiligen Deckplatten-Durchtrittsöffnung der jeweilige Werkstückträger an der Basiseinheit präzise positionierbar und exakt ausrichtbar ist.

Die Kombination aus einer Basiseinheit und mehreren an der Basiseinheit angeordneten Werkstückträgern weist die Positioniergenauigkeit eines Nullpunkt-Spannsystems auf.

Wenn die Kombination aus der Basiseinheit und mehreren daran angeordneten Werkstückträgern in eine Software zur Positionierung von Werkstückträgern und/oder Werkstücken in einem 3D-Drucker eingebunden ist, so kann der Nullpunkt (räumlicher Bezugspunkt) des 3D-Druckverfahrens an weitere Bearbeitungsprozesse, welche auf das 3D-Druckverfahren folgen, übergeben werden.

Die Deckplatte und die Grundplatte der Basiseinheit bilden zusammen ein Gehäuse der Basiseinheit, welches vorzugsweise eine geringe Aufbauhöhe aufweist. Die Höhe des Gehäuses kann beispielsweise höchstens 30 mm, insbesondere höchstens 20 mm, besonders bevorzugt höchstens 15 mm, betragen.

Die jeweils mindestens einen Einspannbolzen umfassenden Werkstückträger können in an das 3D-Druckverfahren anschließenden Bearbeitungsprozessen unter ausreichenden Haltekräften an einer Werkstückträgerhalterung einer Bearbeitungsvorrichtung gehalten sein.

Durch die gleichzeitige Fixierung aller Einspannbolzen aller Werkstückträger, welche an der Oberseite der Deckplatte der Basiseinheit angeordnet sind, ergibt sich eine enorme Zeiteinsparung am Anfang und am Ende des 3D-Druckverfahrens.

Um für ein Metall-3D-Druckverfahren geeignet zu sein, ist vorzugsweise vorgesehen, dass die Basiseinheit aus Materialien gebildet ist, welche einer hohen Temperaturbelastung von mindestens 400°C, insbesondere von mindestens 500°C, besonders bevorzugt von mindestens 650°C, standhalten.

Die erfindungsgemäße Basiseinheit ist sehr leicht zu reinigen und weist eine sehr hohe Wiederholgenauigkeit für die Positionierung der Werkstückträger an der Oberseite der Deckplatte der Basiseinheit auf.

Die Werkstückträger sind über ihre Einspannbolzen mit einer hohen Haltekraft an der Basiseinheit gehalten, wenn das Fixierelement sich in der Arbeitsstellung befindet.

Auf den einzelnen Werkstückträgern, welche auch als Segmente bezeichnet werden können, können in einem Metall-3D-Drucker Werkstücke mit einer Positioniergenauigkeit von 0,05 mm oder besser aufgebaut werden.

Die Werkstückträger können in beliebigen Kombinationen und Positionen an der Oberseite der Deckplatte der Basiseinheit angeordnet werden, solange ihre Einspannbolzen in jeweils eine der Deckplatten-Durchtrittsöffnungen angreifen können.

Werkstückträger, welche nur einen einzigen Einspannbolzen umfassen, können zusätzlich zu dem Einspannbolzen ein Verdrehsicherungselement umfassen, um den betreffenden Werkstückträger verdrehsicher an der Oberseite der Deckplatte der Basiseinheit fixieren zu können.

Durch die ausreichend feste Verbindung der additiv hergestellten Werkstücke mit dem Werkstückträger ist kein zusätzliches Spannen der additiv hergestellten Werkstücke in auf das 3D-Druckverfahren folgenden Bearbeitungsprozessen notwendig.

Ein mit einem Einspannbolzen versehener Werkstückträger kann samt dem an dem Werkstückträger additiv hergestellten Werkstück in an das 3D-Druckverfahren anschließenden Bearbeitungsprozessen mittels des Einspannbolzens mit einer Genauigkeit von 0,005 mm oder besser eingespannt werden.

Bei einer bevorzugten Ausgestaltung der Erfindung ist vorgesehen, dass die Fixierelement-Durchtrittsöffnungen jeweils eine Fase oder jeweils einen Randbereich mit einem kleineren Krümmungsradius und einen Randbereich mit einem größeren Krümmungsradius aufweisen.

In der Ruhestellung des Fixierelements durchsetzen die Einspannbolzen der Werkstückträger vorzugsweise jeweils einen Abschnitt einer jeweils zugeordneten Fixierelement-Durchtrittsöffnung, welcher von dem Randbereich mit dem größeren Krümmungsradius berandet ist.

In der Arbeitsstellung des Fixierelements durchsetzen die Einspannbolzen der Werkstückträger vorzugsweise jeweils einen Abschnitt der jeweils zugeordneten Fixierelement-Durchtrittsöffnung, der von dem Randbereich mit dem kleineren Krümmungsradius berandet wird.

Das Fixierelement kann beispielsweise als eine Fixierplatte ausgebildet sein.

Erfindungsgemäß umfasst das Fixierelement federnd gehaltene Klemmrahmen, an denen jeweils mindestens eine Fixierelement-Durchtrittsöffnung angeordnet ist.

Erfindungsgemäß ist jeder Klemmrahment mittels eines oder mehrerer federnd elastischer Arme an einem Grundkörper des Fixierelements gehalten.

Die Mittelpunkte der Deckplatten-Durchtrittsöffnungen sind vorzugsweise an den Gitterpunkten eines regulären Gitters angeordnet.

Dabei kann es sich beispielsweise um ein Rechteckgitter, ein Quadratgitter oder ein Hexagonalgitter handeln.

Besonders günstig für eine präzise Positionierung und Ausrichtung der Werkstückträger an der Basiseinheit ist es, wenn mittels der Deckplatten-Durchtrittsöffnungen jeweils ein Einspannbolzen eines Werkstückträgers zentrierbar ist, wenn der Einspannbolzen sich durch die betreffende Deckplatten-Durchtrittsöffnung hindurch erstreckt.

Vorzugsweise ist der Einspannbolzen eines Werkstückträgers mit geringem Spiel mittels der Deckplatten-Durchtrittsöffnungen zentrierbar, wenn der Einspannbolzen sich durch die betreffende Deckplatten-Durchtrittsöffnung hindurch erstreckt.

Die Bewegungsvorrichtung der Basiseinheit umfasst vorzugsweise einen mechanischen, pneumatischen, hydraulischen oder elektrischen Antrieb für die Bewegung des Fixierelements von der Ruhestellung in die Arbeitsstellung und/oder von der Arbeitsstellung in die Ruhestellung.

Beispielsweise kann vorgesehen sein, dass die Bewegungsvorrichtung eine Schraube mit einem in axialer Richtung der Schraube relativ zu der Deckplatte und/oder relativ zu der Grundplatte der Basiseinheit ortsfest gelagerten Kopf umfasst.

Die Lagerung des Kopfes der Schraube an der Deckplatte und/oder an der Basisplatte der Basiseinheit kann beispielsweise mittels einer oder mehrerer Lagerscheiben und/oder mittels eines Sicherungsrings erfolgen.

Ferner kann vorgesehen sein, dass die Bewegungsvorrichtung einen Mitnehmer umfasst, welcher mit dem Fixierelement gekoppelt ist und mit einem Antriebselement der Bewegungsvorrichtung in Eingriff steht.

Beispielsweise kann vorgesehen sein, dass der Mitnehmer durch Verschraubung mit dem Fixierelement gekoppelt ist.

Ferner kann vorgesehen sein, dass der Mitnehmer ein Gewinde aufweist, welches vorzugsweise mit einem hierzu komplementären Gewinde der Schraube in Eingriff steht.

Das Gewinde des Mitnehmers ist vorzugsweise als ein Innengewinde ausgebildet.

Bei einer bevorzugten Ausgestaltung der Erfindung ist ferner vorgesehen, dass die Basiseinheit ein elastisch verformbares Andrückelement zum Andrücken des Fixierelements gegen die Deckplatte umfasst.

Ein solches Andrückelement kann beispielsweise als eine Andrückmatte ausgebildet sein.

Das Andrückelement kann beispielsweise Fasern, vorzugsweise Glasfasern und/oder Keramikfasern, umfassen.

Das Andrückelement kann zur Verbesserung der Gleiteigenschaften des Mitnehmers und/oder des Fixierelements aus Graphit gebildet sein und/oder eine Beschichtung aus einem reibungsreduzierenden Material, beispielsweise aus einem Polytetrafluorethylen(PTFE)-Material, umfassen.

Die Grundplatte der Basiseinheit kann Ausnehmungen oder Grundplatten-Durchtrittsöffnungen zur Aufnahme jeweils eines Einspannbolzens eines Werkstückträgers umfassen.

Um die Basiseinheit in einfacher Weise an einem Untergrund oder an einer Einspannvorrichtung lösbar festlegen zu können, ist es von Vorteil, wenn die Basiseinheit mindestens einen Einspannbolzen zum lösbaren Fixieren der Basiseinheit an einem Untergrund oder an einer Einspannvorrichtung umfasst.

Vorzugsweise umfasst die Basiseinheit mehrere solcher Einspannbolzen, beispielsweise vier Einspannbolzen.

Alternativ oder ergänzend hierzu kann auch vorgesehen sein, dass die Basiseinheit eine oder mehrere Durchgangsbohrungen zur Aufnahme jeweils einer Schraube, welche in eine hierzu komplementäre Gewindebohrung an einem Maschinentisch eingreift, umfasst.

Die erfindungsgemäße Basiseinheit eignet sich insbesondere als Bestandteil einer Kombination aus einer erfindungsgemäßen Basiseinheit und mindestens einem Werkstückträger, welcher mindestens einen Einspannbolzen umfasst.

Bei einer bevorzugten Ausgestaltung einer solchen Kombination ist vorgesehen, dass die Kombination mehrere Werkstückträger umfasst, welche derart lösbar an der Basiseinheit fixierbar sind, dass sie zusammen eine ununterbrochene oder nur durch schmale Spalte unterbrochene Gesamt-Werkstücktragefläche bilden.

Der Spalt zwischen den Werkstücktrageflächen von zwei einander benachbarten Werkstückträgern weist dabei eine Breite von vorzugsweise weniger als 2,0 mm, besonders bevorzugt von weniger als 1,0 mm, auf.

Um eine Verdrehung eines an der Basiseinheit fixierten Werkstückträgers relativ zu der Basiseinheit zuverlässig zu verhindern, ist vorzugsweise vorgesehen, dass mindestens einer der Werkstückträger ein Verdrehsicherungselement umfasst.

Grundsätzlich kann ein solches Verdrehsicherungselement durch einen zweiten Einspannbolzen desselben Werkstückträgers gebildet sein, welcher im an der Basiseinheit montierten Zustand des Werkstückträgers in eine zweite Deckplatten- Durchtrittsöffnung eingreift.

Alternativ oder ergänzend hierzu kann aber auch vorgesehen sein, dass das Verdrehsicherungselement von einem Einspannbolzen verschieden ist und vorzugsweise einen Verdrehsicherungsstift, beispielsweise einen Gewindestift, umfasst, wobei der Verdrehsicherungsstift an dem Werkstückträger festgelegt ist und im montierten Zustand des Werkstückträgers in eine Ausnehmung an der Oberseite der Deckplatte der Basiseinheit eingreift.

Eine solche Ausnehmung kann beispielsweise als eine Verdrehsicherungsnut ausgebildet sein.

Eine solche Verdrehsicherungsnut erstreckt sich vorzugsweise parallel zu einer Bewegungsrichtung, längs welcher das Fixierelement von der Ruhestellung in die Arbeitsstellung und/oder von der Arbeitsstellung in die Ruhestellung bewegbar ist, oder parallel zu einer senkrecht zu der Bewegungsrichtung verlaufenden Querrichtung der Basiseinheit.

Alternativ hierzu kann auch vorgesehen sein, dass an dem Werkstückträger als Verdrehsicherungselement eine Ausnehmung, beispielsweise in Form einer Nut, vorhanden ist, welche mittels eines Kopplungselements mit einer Verdrehsicherungsnut an der Oberseite der Deckplatte der Basiseinheit zusammenwirkt.

Ein solches Kopplungselement kann beispielsweise als eine Passfeder ausgebildet sein, welche mit der Ausnehmung an dem Werkstückträger und mit der Verdrehsicherungsnut an der Basiseinheit in Eingriff steht.

Wenn die Einspannbolzen der an der Basiseinheit angeordneten Werkstückträger in der Arbeitsstellung des Fixierelements mit einer federnden Struktur des Fixierelements in Eingriff stehen, so ist gewährleistet, dass alle Einspannbolzen der Werkstückträger sich gleichmäßig und gleichzeitig in Eingriff mit dem Fixierelement befinden, wodurch ein Niederzugeffekt bewirkt wird, welcher die Einspannbolzen der Werkstücke von der Oberseite der Deckplatte der Basiseinheit weg zu der Grundplatte der Basiseinheit hin zieht.

Vorzugsweise umfasst die Kombination aus der Basiseinheit und mehreren Werkstückträgern Werkstückträger von unterschiedlicher Größe, so dass eine Vielzahl von hinsichtlich ihrer Größe und Form verschiedenen Werkstücktragestrukturen aus mehreren solcher Werkstückträger modular aufbaubar ist. Der modulare Aufbau und die unterschiedlichen Größen der Werkstückträger ermöglichen es dem Anwender, Werkstücke unterschiedlicher Formgebung und unterschiedlicher Größe im selben Bauraum auf einer an der Basiseinheit fixierten Werkstücktragestruktur, welche mehrere Werkstückträger mit jeweils mindestens einem Einspannbolzen umfasst, aufzubauen.

Es kann auch eine Kombination aus der Basiseinheit und einem einzigen Werkstückträger vorgesehen sein, wobei der einzige Werkstückträger alle Deckplatten-Durchtrittsöffnungen überdecken kann.

Ferner kann vorgesehen sein, dass von dem Werkstückträger oder den Werkstückträgern nicht überdeckte Deckplatten-Durchtrittsöffnungen mittels jeweils eines Verschlusselements verschlossen werden, um ein Eindringen von Verunreinigungen in den Innenraum des Gehäuses der Basiseinheit zu verhindern. Die Ausrichtung und die Festlegung des Nullpunktes (Bezugspunktes) der Basiseinheit und/oder der an der Basiseinheit angeordneten Werkstückträger kann softwaretechnisch erfolgen.

Wenn die Basiseinheit eine Andrückmatte umfasst, so kann eine solche Andrückmatte verhindern, dass Verunreinigungen in den Innenraum des Gehäuses der Basiseinheit gelangen können.

Außerdem kann eine solche Andrückmatte für eine homogene Wärmeabfuhr sorgen.

Ferner ist eine solche Andrückmatte besonders unempfindlich gegenüber in den Innenraum des Gehäuses der Basiseinheit eindringendem Metallpulver. Die Werkstückträger sind vorzugsweise aus einem Material gebildet, welches einer hohen Temperaturbelastung von vorzugsweise mindestens 400°C, insbesondere mindestens 500°C, besonders bevorzugt mindestens 650°C, standhält.

Ein Grundkörper der Werkstückträger, an welchem eine Werkstücktragefläche des Werkstückträgers ausgebildet ist, ist vorzugsweise aus einem metallischen Material gebildet.

Der eine oder die mehreren Einspannbolzen des Werkstückträgers können beispielsweise aus einem metallischen Material oder aus einem keramischen Material gebildet sein.

Die Deckplatte, die Grundplatte, das Fixierelement, der Mitnehmer und die Schraube der Basiseinheit sind vorzugsweise jeweils aus einem metallischen Material gebildet.

Einspannbolzen, mittels welcher die Basiseinheit an einem Untergrund oder an einer Einspannvorrichtung lösbar festlegbar ist, sind vorzugsweise aus einem metallischen Material oder aus einem keramischen Material gebildet.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine perspektivische Darstellung einer Kombination aus einer Basiseinheit zum lösbaren Fixieren von Werkstückträgern, welche jeweils mindestens einen Einspannbolzen umfassen, und mehreren Werkstückträgern unterschiedlicher Größe, welche jeweils einen oder mehrere Einspannbolzen aufweisen und derart lösbar an der Basiseinheit fixiert sind, dass jeweils zwei der Werkstückträger einander benachbart angeordnet sind und die Werkstückträger gemeinsam eine nahezu geschlossene Werkstücktragefläche, die nur durch schmale Spalte unterbrochen ist, bilden;
- Fig. 2: eine Draufsicht von oben auf die Kombination aus einer Basiseinheit und mehreren Werkstückträgern aus Fig. 1;
- Fig. 3: eine Vorderansicht der Kombination aus einer Basiseinheit und mehreren Werkstückträgern aus den Fig. 1 und 2, mit der Blickrichtung in Richtung des Pfeiles 3 in Fig. 2;
- Fig. 4: eine Rückansicht der Kombination aus einer Basiseinheit und mehreren Werkstückträgern aus den Fig. 1 bis 3, mit der Blickrichtung in Richtung des Pfeiles 4 in Fig. 2;
- Fig. 5: eine Seitenansicht der Kombination aus einer Basiseinheit und mehreren Werkstückträgern aus den Fig. 1 bis 4, mit der Blickrichtung in Richtung des Pfeiles 5 in Fig. 2;
- Fig. 6: einen senkrecht zu einer Oberseite der Basiseinheit genommenen Schnitt durch die Kombination aus einer Basiseinheit und mehreren Werkstückträgern aus den Fig. 1 bis 5, im Bereich eines Mitnehmers einer Bewegungsvorrichtung der Basiseinheit, welche dazu dient, ein Fixierelement der Basiseinheit von einer Ruhestellung in eine Arbeitsstellung oder von einer Arbeitsstellung in die Ruhestellung zu bewegen;
- Fig. 7: eine Draufsicht auf die Kombination aus einer Basiseinheit und mehreren Werkstückträgern aus den Fig. 1 bis 6 von unten, mit der Blickrichtung in Richtung des Pfeiles 7 in Fig. 3;
- Fig. 8: einen parallel zu der Oberseite der Basiseinheit genommenen Querschnitt durch die Kombination aus einer Basiseinheit und mehreren Werkstückträgern aus den Fig. 1 bis 7, auf der Höhe des Fixierelements, welches mit Fixierelement-Durchtrittsöffnungen versehen ist, durch die jeweils ein Einspannbolzen eines Werkstückträgers hindurchtreten kann, und mittels welchem die Einspannbolzen der Werkstückträger an der Basiseinheit fixierbar sind, wobei das Fixierelement sich in einer Arbeitsstellung befindet, in welcher die Einspannbolzen der Werkstückträger an der Basiseinheit verriegelt sind;
- Fig. 9: einen parallel zu der Schnittebene von Fig. 6 genommenen weiteren Schnitt durch die Kombination aus einer Basiseinheit und mehreren Werkstückträgern aus den Fig. 1 bis 8, wobei die Schnittebene senkrecht zu der Oberseite der Basiseinheit ausgerichtet ist und durch fünf der Werkstückträger verläuft;
- Fig. 10: einen der Fig. 8 entsprechenden Querschnitt durch die Kombination aus einer Basiseinheit und mehreren Werkstückträgern aus den Fig. 1 bis 9, auf der Höhe des Fixierelements, wobei das Fixierelement sich in einer Ruhestellung befindet, in welcher die Einspannbolzen der Werkstückträger nicht an der Basiseinheit verriegelt sind;
- Fig. 11: einen der Fig. 9 entsprechenden Schnitt durch die Kombination aus einer Basiseinheit und mehreren Werkstückträgern, wobei das Fixierelement sich in der Ruhestellung befindet, in welcher die Einspannbolzen der Werkstückträger nicht an der Basiseinheit verriegelt sind;
- Fig. 12: einen parallel zu der Schnittebene der Fig. 8 und 10 genommenen Querschnitt durch die Kombination aus einer Basiseinheit und mehreren Werkstückträgern auf einer niedrigeren Höhe, mit größerem Abstand von der Oberseite der Basiseinheit, wobei die Schnittebene durch den Mitnehmer der Bewegungsvorrichtung der Basiseinheit verläuft und das Fixierelement sich in der Arbeitsstellung befindet, in welcher die Einspannbolzen der Werkstückträger an der Basiseinheit verriegelt sind;
- Fig. 13: einen parallel zu der Schnittebene der Fig. 9 und 11 genommenen Schnitt durch die Kombination aus einer Basiseinheit und mehreren Werkstückträgern, im Bereich der vier hinteren Werkstückträger, längs der Linie 13 - 13 in Fig. 12;
- Fig. 14: eine perspektivische Darstellung des Fixierelements der Basiseinheit aus den Fig. 1 bis 13;
- Fig. 15: eine Draufsicht auf das Fixierelement aus Fig. 14 von oben, auf eine einer Deckplatte der Basiseinheit zugewandte Oberseite des Fixierelements;
- Fig. 16: eine perspektivische Darstellung eines der Werkstückträger aus den Fig. 1 bis 13, welcher einen Grundkörper mit einem quadratischen Grundriss und vier Einspannbolzen aufweist, mit der Blickrichtung auf eine im montierten Zustand des Werkstückträgers der Deckplatte der Basiseinheit zugewandte Unterseite des Werkstückträgers;
- Fig. 17: eine Vorderansicht des Werkstückträgers aus Fig. 16;
- Fig. 18: eine perspektivische Darstellung einer zweiten Ausführungsform einer Kombination aus einer Basiseinheit zum lösbaren Fixieren von Werkstückträgern, welche jeweils mindestens einen Einspannbolzen umfassen, und mehreren Werkstückträgern, welche lösbar an der Basiseinheit fixiert sind;
- Fig. 19: eine Draufsicht von oben auf eine Oberseite der Grundplatte der Basiseinheit aus Fig. 18, welche mit Nuten zur Aufnahme von Verdrehsicherungselementen der Werkstückträger versehen ist;
- Fig. 20: einen senkrecht zu der Oberseite der Deckplatte der Basiseinheit aus den Fig. 18 und 19 genommenen Schnitt durch die Kombination aus einer Basiseinheit und mehreren Werkstückträgern aus den Fig. 18 und 19, im Bereich eines der Werkstückträger mit quadratischem Grundriss, längs der Linie 20 - 20 in Fig. 19;
- Fig. 21: eine perspektivische Darstellung eines der Werkstückträger der Kombination aus einer Basiseinheit und mehreren Werkstückträgern aus den Fig. 18 bis 20, wobei der Werkstückträger einen Grundkörper mit einem quadratischen Grundriss, einen Einspannbolzen und ein Verdrehsicherungselement umfasst, mit der Blickrichtung auf eine im montierten Zustand des Werkstückträgers der Oberseite der Deckplatte der Basiseinheit zugewandte Unterseite des Werkstückträgers;
- Fig. 22: eine Draufsicht auf die Unterseite des Werkstückträgers aus Fig. 21; und
- Fig. 23: einen senkrecht zu einer Werkstücktragefläche des Werkstückträgers aus den Fig. 21 und 22 genommenen Schnitt durch den Werkstückträger aus den Fig. 21 und 22, längs der Linie 23 - 23 in Fig. 22.

Gleiche oder funktional äquivalente Elemente sind in allen Figuren mit denselben Bezugszeichen bezeichnet.

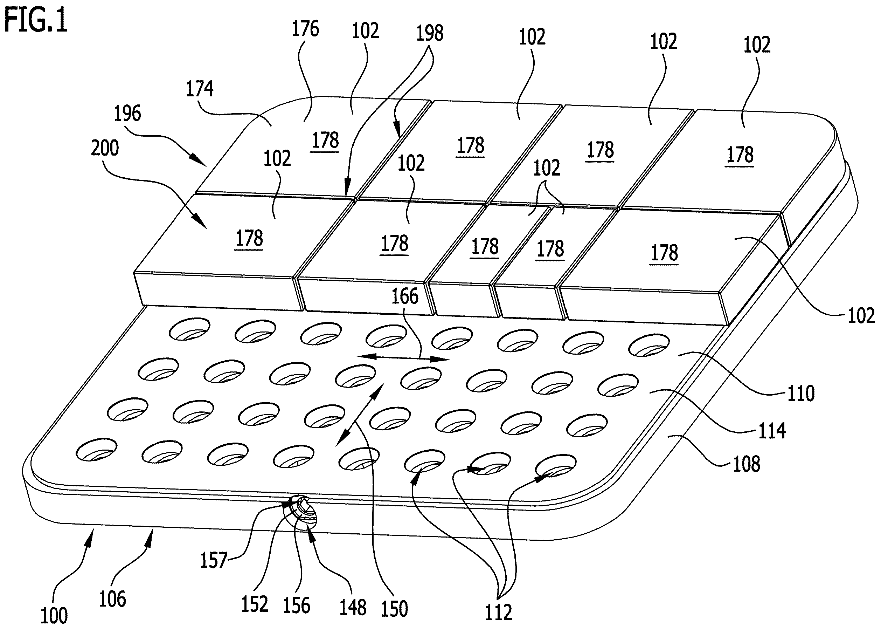

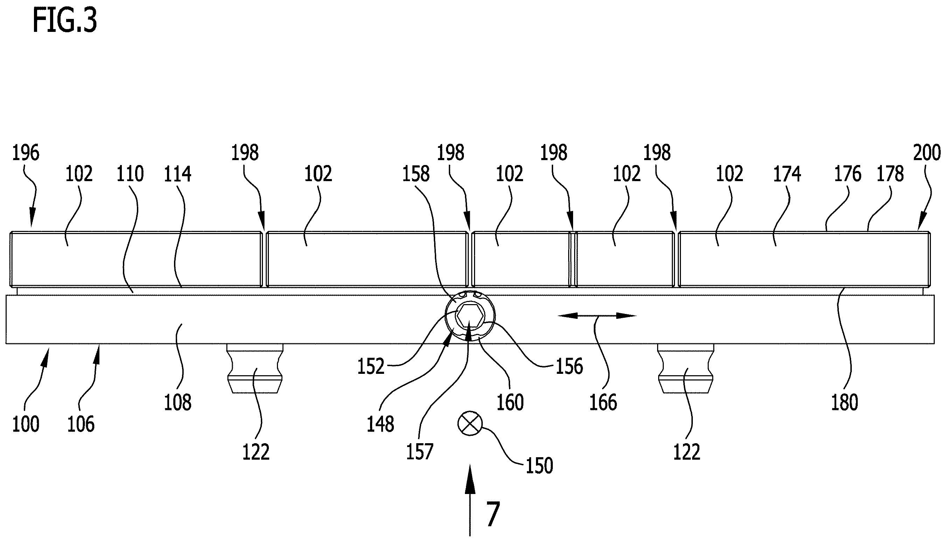

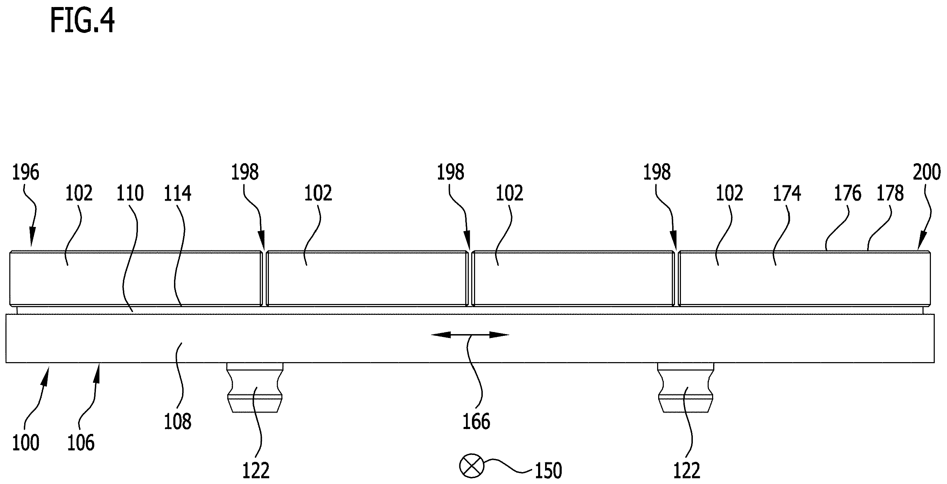

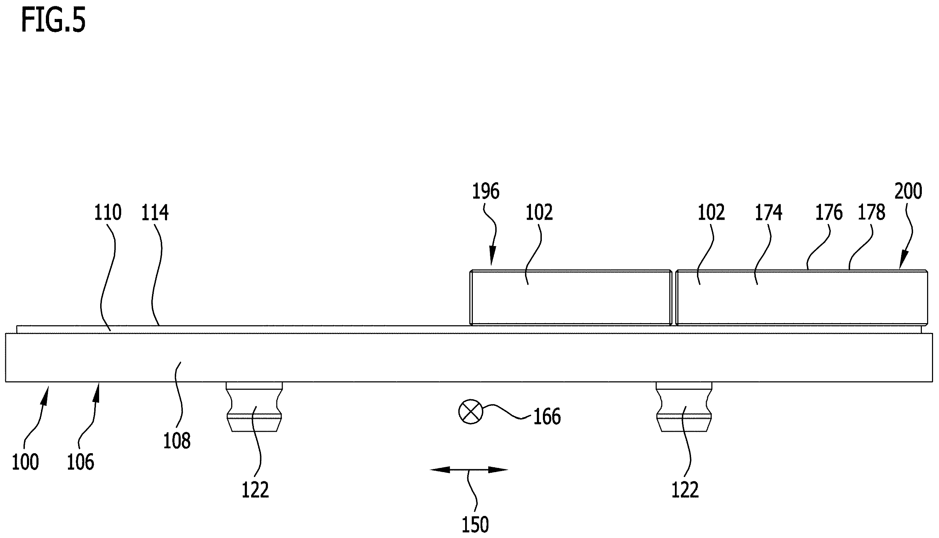

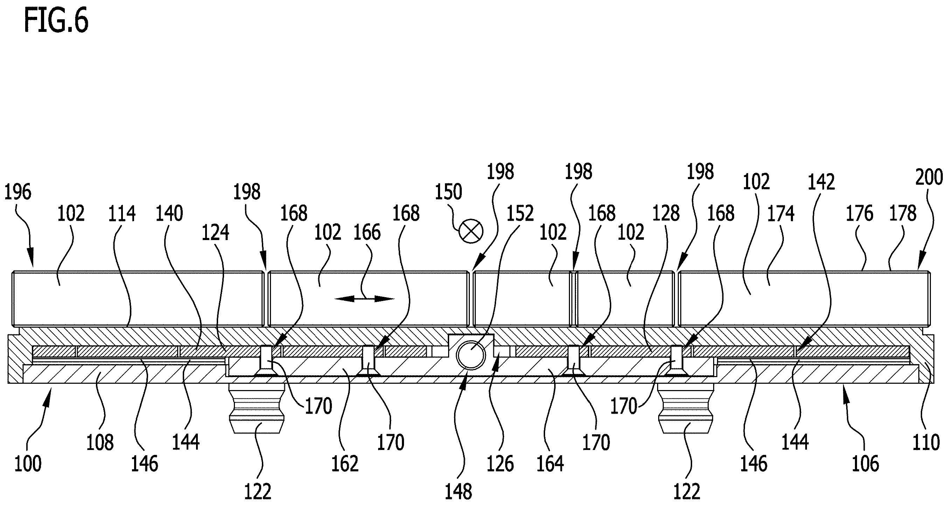

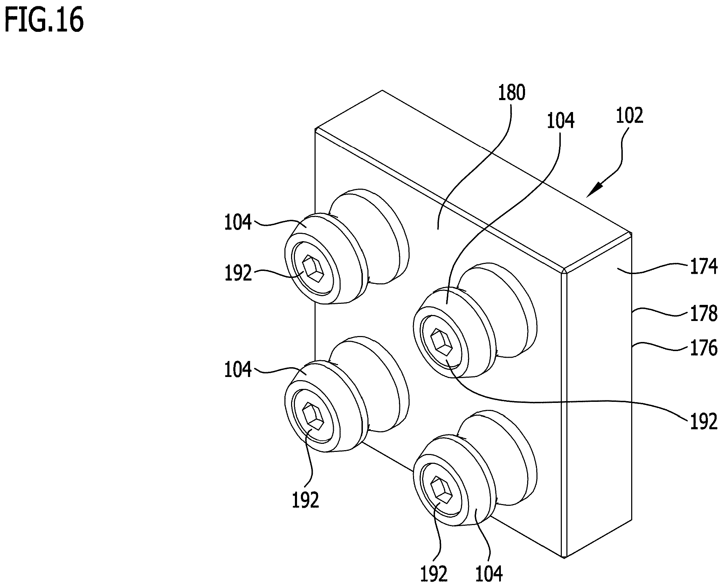

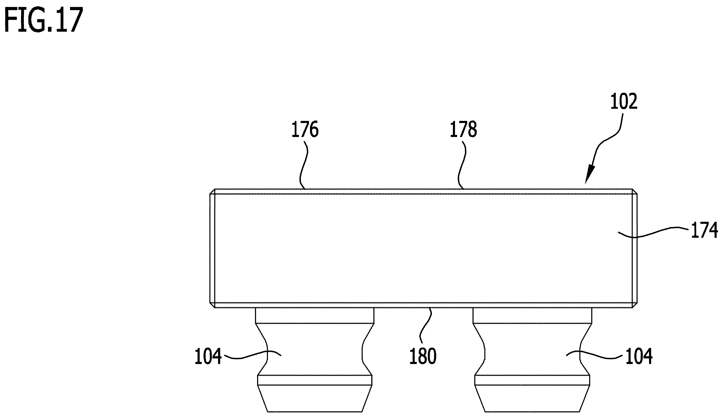

Eine in den Fig. 1 bis 15 dargestellte, als Ganzes mit 100 bezeichnete Basiseinheit zum lösbaren Fixieren von Werkstückträgern 102, welche jeweils einen oder mehrere Einspannbolzen 104 umfassen (siehe beispielsweise den in den Fig. 16 und 17 dargestellten Werkstückträger 102), umfasst ein Gehäuse 106, welches eine Grundplatte 108 und eine Deckplatte 110 umfasst (siehe beispielsweise Fig. 6).

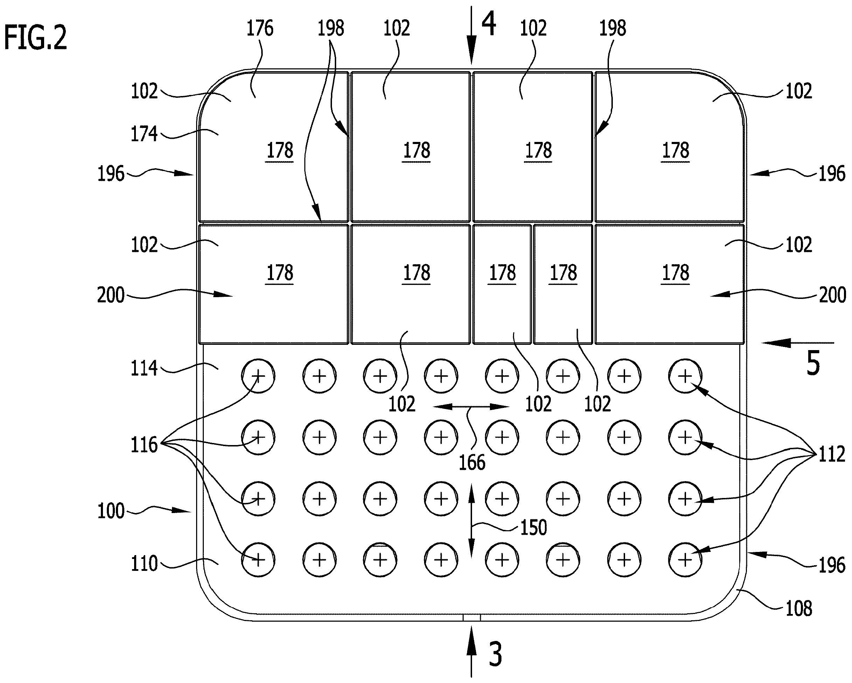

Wie beispielsweise aus Fig. 2 zu ersehen ist, ist die Deckplatte 110 mit Deckplatten-Durchtrittsöffnungen 112 versehen, durch die jeweils ein Einspannbolzen 104 eines Werkstückträgers 102 hindurchtreten kann, wenn der betreffende Werkstückträger 102 an einer Oberseite 114 der Deckplatte 110 angeordnet ist.

Die Mittelpunkte 116 der Deckplatten-Durchtrittsöffnungen 112 sind vorzugsweise an den Gitterpunkten eines regulären Gitters angeordnet. Im zeichnerisch dargestellten Ausführungsbeispiel sind die Mittelpunkte 116 der Deckplatten-Durchtrittsöffnungen 112 an den Gitterpunkten eines Quadratgitters angeordnet.

Das Quadratgitter umfasst beispielsweise acht Zeilen und acht Spalten von Deckplatten-Durchtrittsöffnungen 112, insgesamt also beispielsweise 8 x 8 = 64 Deckplatten-Durchtrittsöffnungen 112.

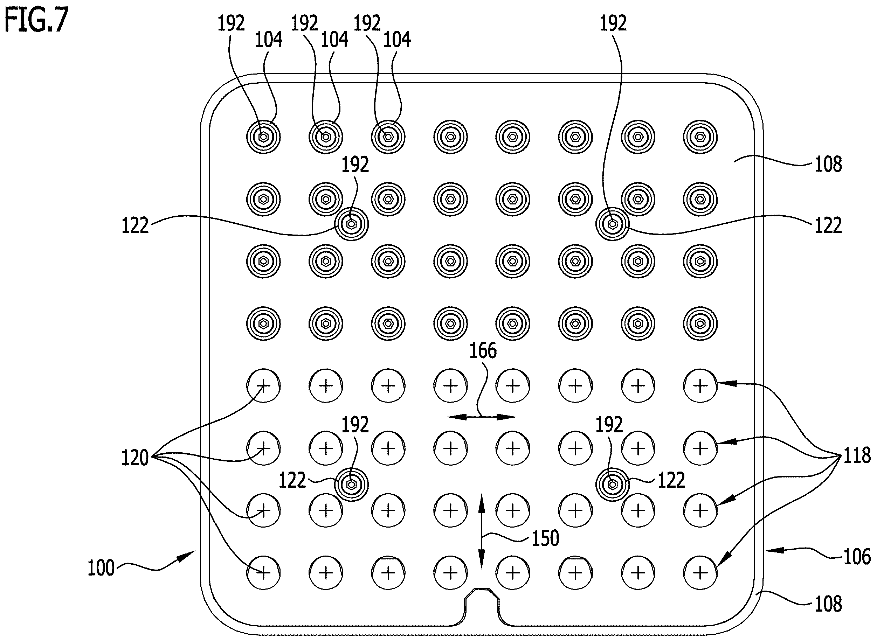

Wie am besten aus Fig. 7 zu ersehen ist, ist bei diesem Ausführungsbeispiel auch die Grundplatte 108 mit Durchtrittsöffnungen, nämlich mit Grundplatten-Durchtrittsöffnungen 118, versehen, und die Einspannbolzen 104 von Werkstückträgern 102, welche an der Oberseite 114 der Deckplatte 110 der Basiseinheit 100 angeordnet sind, erstrecken sich bis in jeweils eine dieser Grundplatten-Durchtrittsöffnungen 118 hinein.

Auch die Mittelpunkte 120 der Grundplatten-Durchtrittsöffnungen 118 sind vorzugsweise an den Gitterpunkten eines regulären Gitters angeordnet.

Im zeichnerisch dargestellten Ausführungsbeispiel sind die Mittelpunkte 120 der Grundplatten-Durchtrittsöffnungen 118 in einem Quadratgitter angeordnet.

Das Quadratgitter der Grundplatten-Durchtrittsöffnungen 118 umfasst beispielsweise acht Zeilen und acht Spalten von Grundplatten-Durchtrittsöffnungen 118, also insgesamt beispielsweise 8 x 8 = 64 Grundplatten-Durchtrittsöffnungen 118.

Wie ebenfalls aus Fig. 7 und beispielsweise Fig. 6 zu ersehen ist, umfasst die Basiseinheit 100 ferner mehrere, im dargestellten Ausführungsbeispiel vier, Einspannbolzen 122, mittels welcher die Basiseinheit 100 an einem Untergrund oder an einer (nicht dargestellten) Einspannvorrichtung lösbar fixierbar ist.

Eine solche Einspannvorrichtung kann beispielsweise eine oder mehrere Nullpunkt-Spannsysteme umfassen, die jeweils eine Aufnahme aufweisen, in welche jeweils ein Einspannbolzen 122 einführbar und dort, beispielsweise durch Federkraft oder durch Einwirkung eines unter Druck stehenden Fluids auf einen Kolben, verriegelbar ist.

Die Basiseinheit 100 umfasst ferner ein Fixierelement 124, welches in dem von der Grundplatte 108 und der Deckplatte 110 umgebenen Innenraum 126 des Gehäuses 106 der Basiseinheit 100 angeordnet ist.

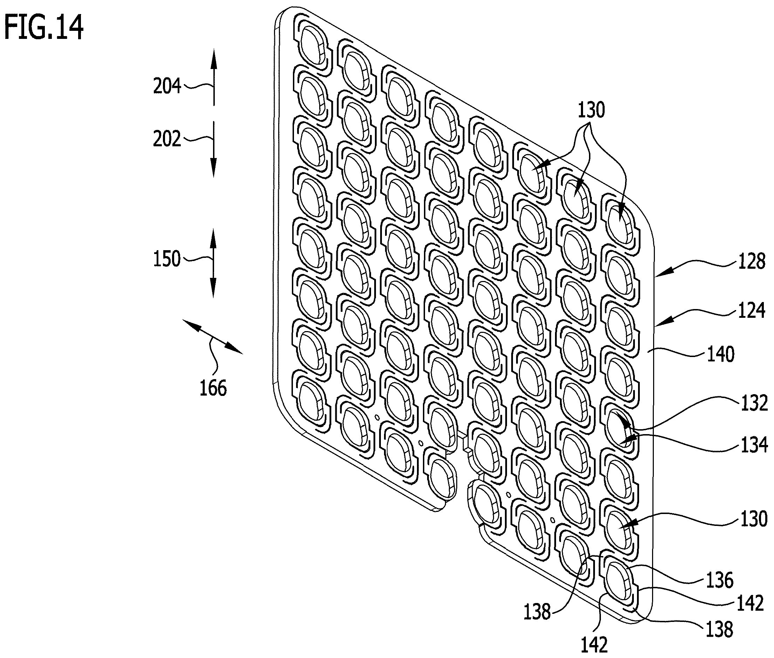

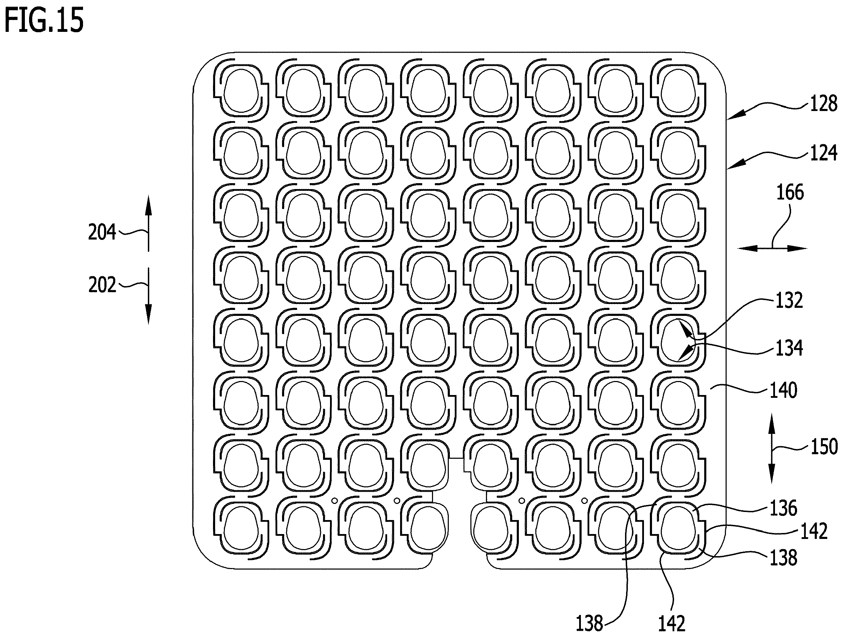

Das Fixierelement 124 ist in den Fig. 14 und 15 separat dargestellt und beispielweise als eine Fixierplatte 128 ausgebildet.

Das Fixierelement 124 weist für jede Deckplatten-Durchtrittsöffnung 112 in der Deckplatte 110 jeweils eine zugeordnete Fixierplatten-Durchtrittsöffnung 130 auf, welche mit der jeweils zugeordneten Deckplatten-Durchtrittsöffnung 112 fluchtet.

Wie am besten aus Fig. 15 zu ersehen ist, weist jede Fixierelement-Durchtrittsöffnung 130 einen Randbereich 132 auf, welcher einen kleineren Krümmungsradius aufweist, und einen Randbereich 134 auf, welcher einen größeren Krümmungsradius aufweist.

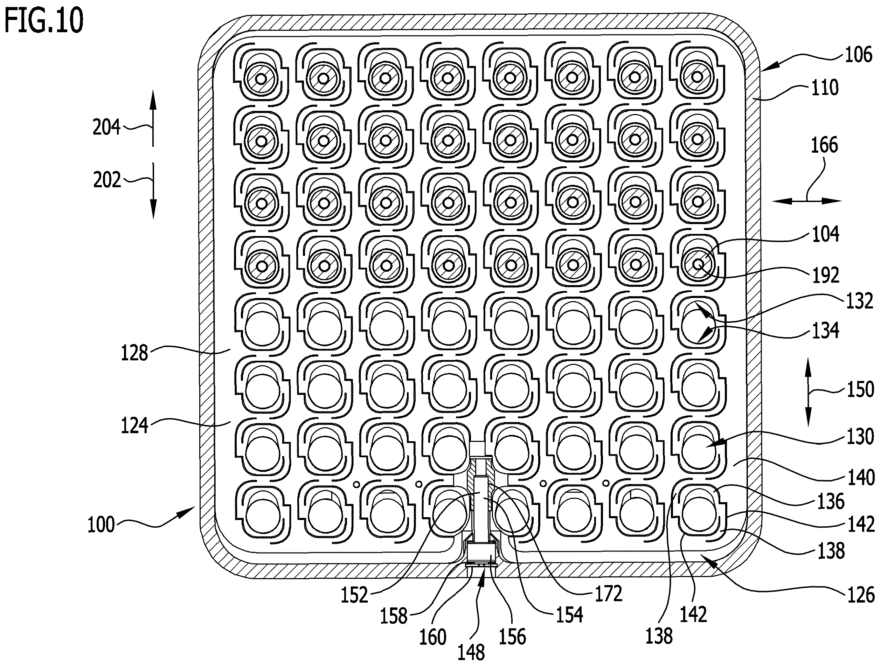

Wie aus Fig. 10 zu ersehen ist, welche die Basiseinheit 100 in einer Ruhestellung des Fixierelements 124 darstellt, erstrecken sich die Einspannbolzen 104 der Werkstückträger 102 in dieser Ruhestellung des Fixierelements 124 durch einen Abschnitt der jeweils zugeordneten Fixierelement-Durchtrittsöffnung 130 hindurch, welcher von dem Randbereich 134 mit dem größeren Krümmungsradius berandet wird, wobei die Einspannbolzen 104 nicht von dem Fixierelement 124 geklemmt werden und vorzugsweise nirgends in Kontakt mit dem Fixierelement 124 stehen.

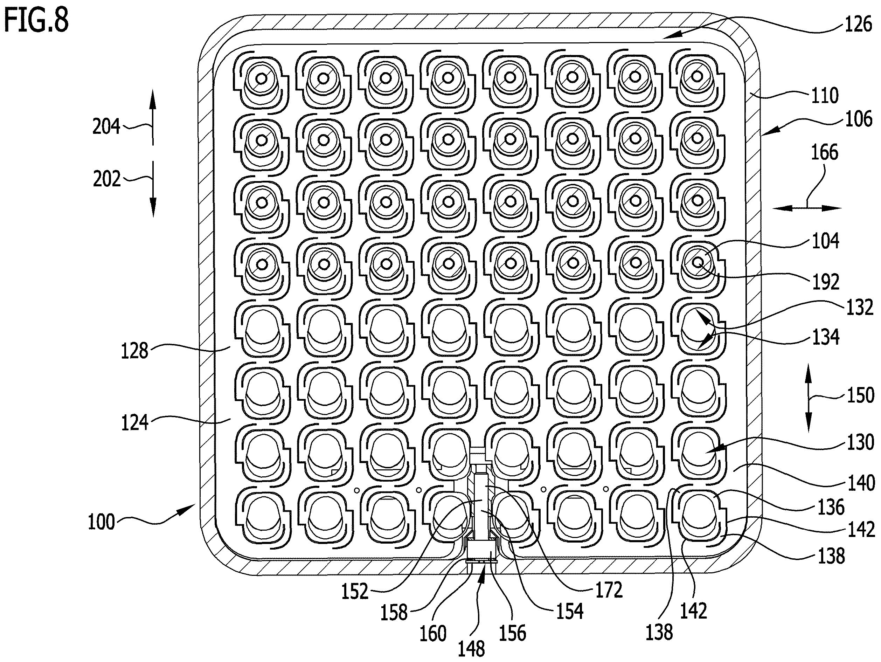

In der in Fig. 8 dargestellten Arbeitsstellung des Fixierelements 124 ist hingegen das Fixierelement 124 so relativ zu den Einspannbolzen 104 der Werkstückträger 102 verschoben, dass die Einspannbolzen 104 sich durch einen Abschnitt der jeweils zugeordneten Fixierelement-Durchtrittsöffnung 130 hindurch erstrecken, welcher von dem Randbereich 132 mit dem kleineren Krümmungsradius berandet wird.

In dieser Arbeitsstellung des Fixierelements 124 steht jeder Einspannbolzen 104 an zwei Klemmpunkten in Kontakt mit dem Fixierelement 124, am Rand der jeweils dem Einspannbolzen 104 zugeordneten Fixierelement-Durchtrittsöffnung 130, so dass der betreffende Einspannbolzen 104 durch das Fixierelement 124 geklemmt wird, wodurch der Einspannbolzen 104 nach unten, in die jeweils zugeordnete Grundplatten-Durchtrittsöffnung 118 hinein, gezogen und durch Formschluss an der Basiseinheit 100 verriegelt wird.

Jede Fixierelement-Durchtrittsöffnung 130 ist an einem Klemmrahmen 136 angeordnet, welcher über zwei federnde Arme 138 elastisch federnd an einem Grundkörper 140 des Fixierelements 124 gehalten ist.

Der Grundkörper 140, die federnden Arme 138 und die Klemmrahmen 136 des Fixierelements 124 sind vorzugsweise alle einstückig miteinander ausgebildet.

Die Beweglichkeit der Klemmrahmen 136 relativ zu dem Grundkörper 140 des Fixierelements 124 wird dadurch erreicht, dass jeder Klemmrahmen 136 und jeder der federnden Arme 138 durch zwei Konturschnitte 142 von dem Grundkörper 140 getrennt ist.

Ferner trennen die Konturschnitte 142 auch Abschnitte des Klemmrahmens 136 von benachbarten Abschnitten der federnden Arme 138.

Das Fixierelement 124 wird aus einem flachen Ausgangsmaterial, beispielsweise aus einem Metallblech, dadurch hergestellt, dass die Konturschnitte 142 in das flache Ausgangsmaterial eingebracht werden und die Fixierelement-Durchtrittsöffnungen 130 aus dem flachen Ausgangsmaterial herausgetrennt, beispielsweise ausgestanzt oder, beispielsweise mittels eines Lasers, ausgeschnitten werden.

Durch die elastisch federnde Halterung der Klemmrahmen 136 relativ zu dem Grundkörper 140 des Fixierelements 124 und durch die schwimmende Lagerung des Fixierelements 124 im Innenraum 126 des Gehäuses 106 der Basiseinheit 100 werden Toleranzen in der Position der Einspannbolzen 104 relativ zu der Position des Fixierelements 124 und Toleranzen in der Position und Form der Deckplatten-Durchtrittsöffnungen 112 in Bezug auf die Position der Fixierelement-Durchtrittsöffnungen 130 ausgeglichen. Dies ermöglicht es, alle Einspannbolzen 104 von an der Oberseite 114 der Deckplatte 110 der Basiseinheit 100 angeordneten Werkstückträgern 102 gleichzeitig und gleich fest an der Basiseinheit 100 einzuspannen und in ihrer Lage an der Basiseinheit 100 zu fixieren.

Die Basiseinheit 100 umfasst ferner ein elastisch verformbares Andrückelement 144 mittels welchem das Fixierelement 124 gegen die Deckplatte 110 der Basiseinheit 100 andrückbar ist (siehe beispielsweise Fig. 6).

Das Andrückelement 144 ist beispielsweise als eine Andrückmatte 146 ausgebildet.

Die Andrückmatte 146 ist vorzugsweise als eine flexible hitzebeständige Fasermatte ausgebildet.

Das Andrückelement 144 weist für jede Fixierelement-Durchtrittsöffnung 130 jeweils eine derselben zugeordnete Andrückelement-Durchtrittsöffnung auf, durch welche sich ein in der Fixierelement-Durchtrittsöffnung 130 aufgenommener Einspannbolzen 104 eines Werkstückträgers 102 hindurch erstrecken kann.

Durch die Vorspannung des Fixierelements 124 gegen die Deckplatte 110 der Basiseinheit 100 mittels des elastisch verformbaren Andrückelements 144 wird gewährleistet, dass die Einspannkonturen der Fixierelement-Durchtrittsöffnungen 130 stets in Eingriff mit dem jeweils zugeordneten Einspannbolzen 104 eines Werkstückträgers 102 gelangen können.

Außerdem verhindert das Andrückelement 144 - zumindest teilweise - das Eindringen von Verunreinigungen in den Innenraum 126 des Gehäuses 106 der Basiseinheit 100 und/oder eine Weiterverbreitung von Verunreinigungen im Innenraum 126 des Gehäuses 106 der Basiseinheit 100.

Solche Verunreinigungen können beispielsweise Metallpulverteilchen umfassen, welche anfallen, wenn ein Werkstück in einem 3D-Druckverfahren auf einem oder mehreren der Werkstückträger 102 aufgebaut wird.

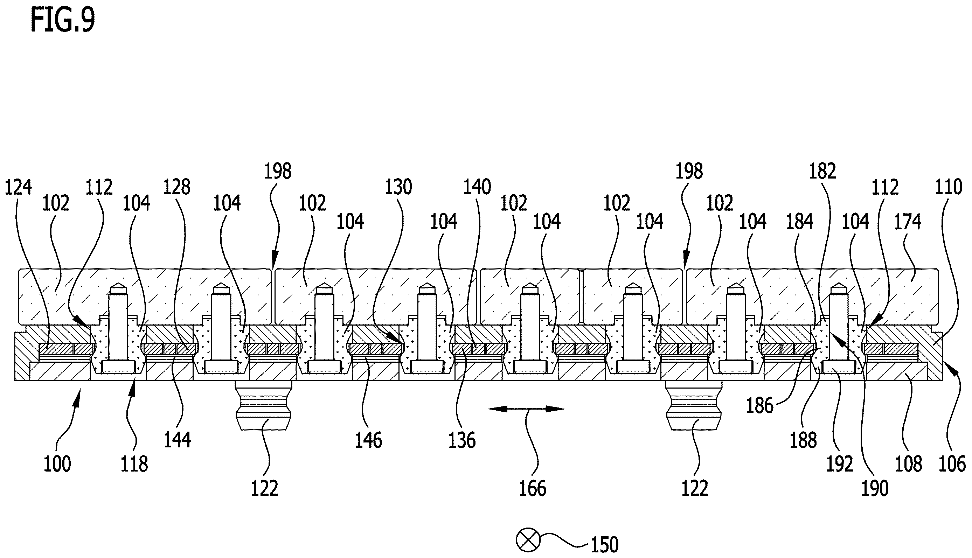

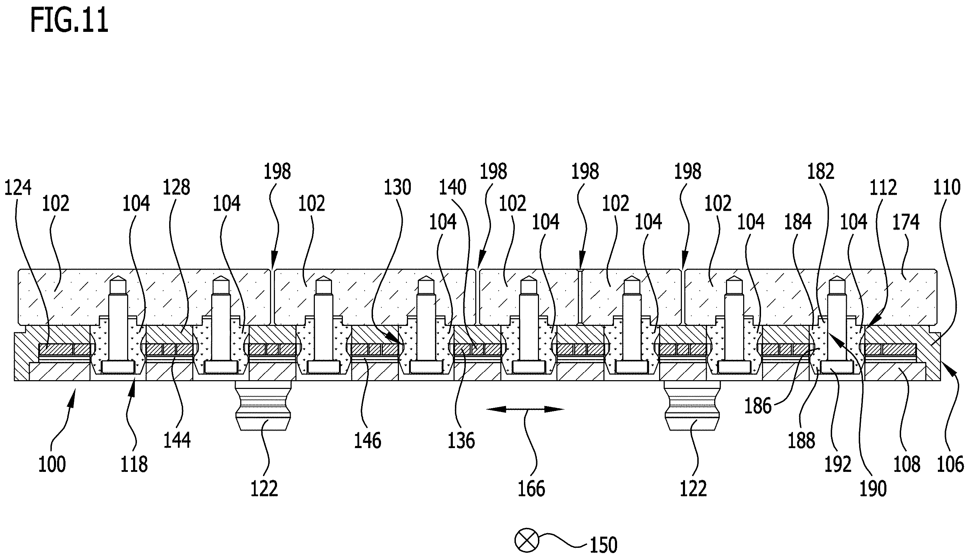

Um das Fixierelement 124 der Basiseinheit 100 von der in den Fig. 10 und 11 dargestellten Ruhestellung, in welcher die Werkstückträger 102 von der Basiseinheit 100 abgehoben werden können, in die in den Fig. 8 und 9 dargestellte Arbeitsstellung zu bewegen, in welcher die Einspannbolzen 104 der Werkstückträger 102 mittels des Fixierelements 124 fixiert und verriegelt sind, umfasst die Basiseinheit 100 eine Bewegungsvorrichtung 148, welche einen mechanischen, pneumatischen oder elektrischen Antrieb für die Bewegung des Fixierelements 124 von der Ruhestellung in die Arbeitsstellung und/oder von der Arbeitsstellung in die Ruhestellung umfasst.

Bei der zeichnerisch dargestellten Ausführungsform einer Basiseinheit 100 umfasst die Bewegungsvorrichtung 148 einen mechanischen Antrieb für die Bewegung des Fixierelements 124 von der Ruhestellung in die Arbeitsstellung längs einer Bewegungsrichtung 150 (siehe beispielsweise die Fig. 8 und 10).

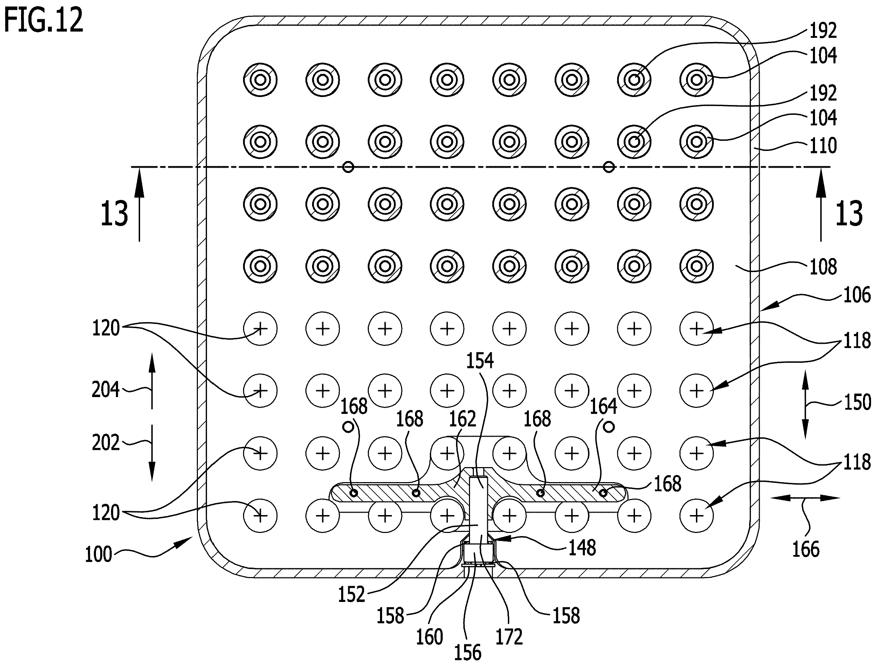

Wie am besten aus Fig. 12 zu ersehen ist, umfasst die Bewegungsvorrichtung 148 beispielsweise eine Schraube 152, deren Schaft 154 sich parallel zu der Bewegungsrichtung 150 erstreckt und deren Kopf 156 in axialer Richtung fixiert, aber um die Längsachse der Schraube 152 drehbar an dem Gehäuse 106 der Basiseinheit 100, das heißt an der Deckplatte 110 und/oder an der Grundplatte 108, gelagert ist.

Die Lagerung des Kopfs 156 der Schraube 152 kann beispielsweise mittels Lagerscheiben 158 erfolgen, welche an einer Unterseite bzw. an einer Oberseite des Kopfes 156 anliegen.

Diese Lagerscheiben 158 können beispielsweise aus Messing gebildet sein.

In ihrer vorgegebenen axialen Position wird die Schraube 152 mittels eines Sicherungsrings 160 festgehalten.

Der Kopf 156 der Schraube 152 ist mit einer Aufnahme 157 für ein Betätigungswerkzeug versehen.

Diese Aufnahme kann insbesondere einen polygonalen Querschnitt, beispielsweise einen sechseckigen Querschnitt, aufweisen.

Das Außengewinde der Schraube 152 an dem Schaft 154 steht in Eingriff mit einem hierzu komplementären Innengewinde eines Mitnehmers 162, der beispielsweise die Form eines stegförmigen Schiebers 164 aufweist, welcher sich in einer zu der Bewegungsrichtung 150 senkrechten Querrichtung 166 der Basiseinheit 100 erstreckt.

Der Mitnehmer 162 ist an einer oder mehreren, beispielsweise an vier, Kopplungsstellen 168 an das Fixierelement 124 gekoppelt (siehe Fig. 6).

Die Kopplung zwischen dem Mitnehmer 162 und dem Fixierelement 124 kann beispielsweise durch Verschraubung mittels Kopplungsschrauben 170, durch Vernietung oder stoffschlüssig, beispielsweise durch Verschweißung, Verlötung oder Verklebung, hergestellt sein.

Der Mitnehmer 162 ist also an dem Fixierelement 124 festgelegt und steht mit der Schraube 152, welche als ein Antriebselement 172 dient, in Eingriff.

Der Mitnehmer 162 ermöglicht somit eine Kraftübertragung von dem Antriebselement 172, beispielsweise der Schraube 152, auf das Fixierelement 124.

Von den Werkstückträgern 102 ist einer exemplarisch in den Fig. 16 und 17 dargestellt.

Jeder Werkstückträger 102 umfasst einen Grundkörper 174, der vorzugsweise im Wesentlichen quaderförmig ausgebildet ist.

Eine Oberseite 176 des Grundkörpers 174 dient als eine Werkstücktragefläche 178 des Werkstückträgers 102, auf welcher ein Werkstück oder ein Teil eines Werkstücks durch einen Aufbauprozess, beispielsweise durch ein 3D-Druckverfahren, aufgebaut werden kann.

An einer der Werkstücktragefläche 178 des Werkstückträgers 102 abgewandten Unterseite 180 des Werkstückträgers 102 sind einer oder mehrere Einspannbolzen 104 angeordnet.

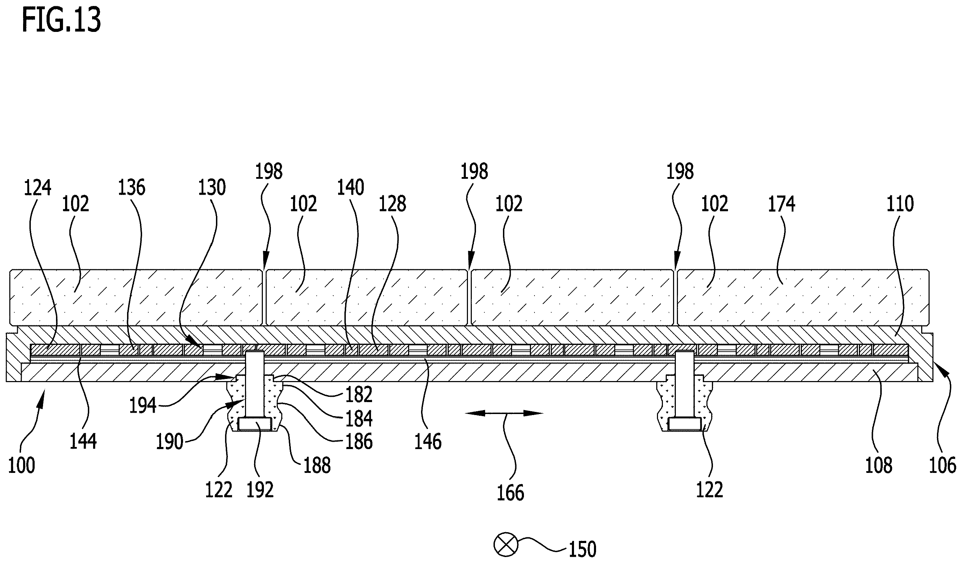

Diese Einspannbolzen 104 können genauso aufgebaut sein wie die Einspannbolzen 122, welche an der Unterseite der Grundplatte 108 der Basiseinheit 100 angeordnet sind und im Schnitt in Fig. 13 dargestellt sind, auf welche im Folgenden Bezug genommen wird.

Jeder Einspannbolzen 104 oder 122 umfasst einen Passvorsprung 182, einen Zentrierbund 184, einen Einschnürbereich 186 und einen verdickten Endbereich 188, wobei der Einschnürbereich 186 einen kleineren Außendurchmesser aufweist als der verdickte Endbereich 188 und der Zentrierbund 184.

Jeder Einspannbolzen 104 oder 122 wird von einer mittigen gestuften Bohrung 190 durchsetzt, welche im montierten Zustand des Einspannbolzens 104, 122 eine Fangschraube 192 aufnimmt.

Die Fangschraube 192 erstreckt sich im montierten Zustand des Einspannbolzens 104, 122 mit ihrem Außengewinde in ein hierzu komplementäres Innengewinde hinein, das an dem Grundkörper 174 des Werkstückträgers 102 bzw. an der Grundplatte 108 der Basiseinheit 100 ausgebildet ist.

Das mit diesem Innengewinde versehene Gewindeloch des Werkstückträgers 102 bzw. der Grundplatte 108 ist von einer Passbohrung 194 umgeben, welche im montierten Zustand des Einspannbolzens 104, 122 den komplementär hierzu ausgebildeten Passvorsprung 182 des Einspannbolzens 104, 122 aufnimmt und hierdurch eine präzise Ausrichtung des Einspannbolzens 104, 122 parallel zu der Längsmittelachse des Gewindelochs ermöglicht.

Der Zentrierbund 184 des Einspannbolzens 104, 122 liegt im montierten Zustand des Einspannbolzens 104, 122 an der Unterseite 180 des Werkstückträgers 102 bzw. an der Unterseite der Grundplatte 108 der Basiseinheit 100 an.

Von den Werkstückträgern 102 ist jeder vorzugsweise mit mindestens zwei Einspannbolzen 104 versehen, wodurch eine Verdrehsicherung des Werkstückträgers 102 erreicht wird, wenn die mindestens zwei Einspannbolzen 104 in jeweils zugeordneten Fixierelement-Durchtrittsöffnungen 130 der Basiseinheit 100 fixiert und verriegelt sind.

Wie aus den Fig. 1 bis 5 zu ersehen ist, bilden die mehreren Werkstückträger 102, deren Grundkörper 174 alle gleich hoch sind und deren Werkstücktragefläche-Kanten die gleiche Länge wie die Kante einer anderen Werkstücktragefläche 178 oder ein ganzzahliges Vielfaches der Länge der Kante einer anderen Werkstücktragefläche 178 aufweisen, ein modulares Werkstückträger-System, welches es erlaubt, eine Werkstücktragestruktur 196 an der Oberseite 114 der Grundplatte 108 zu bilden, in welcher die Werkstücktrageflächen 178 der Werkstückträger 102 zusammen eine (bis auf schmale Spalte 198) durchgehende Gesamt-Werkstücktragefläche 200 ausbilden.

Durch Hinzufügen oder Wegnehmen von Werkstückträgern 102 kann diese Gesamt-Werkstücktragefläche 200 hinsichtlich ihrer Form und Größe an den jeweiligen Bedarf angepasst werden.

Insbesondere kann vorgesehen sein, dass im Wesentlichen die gesamte Oberseite 114 der Deckplatte 110 der Basiseinheit 100 durch Werkstückträger 102 überdeckt ist, welche zusammen eine Gesamt-Werkstücktragefläche 200 aufweisen, deren Flächeninhalt im Wesentlichen dem Flächeninhalt der Oberseite 114 der Deckplatte 110 der Basiseinheit 100 entspricht.

Die Grundkörper 174 der Werkstückträger 102 sind vorzugsweise aus einem hitzebeständigen metallischen Material gebildet.

Die Einspannbolzen 104 der Werkstückträger 102 sind vorzugsweise aus einem hitzebeständigen keramischen Material gebildet.

Auf der durch die Werkstücktragestruktur 196 gebildeten Gesamt-Werkstücktragefläche 200 können ein oder mehrere Werkstücke in einem Aufbauverfahren, beispielsweise durch Metall-3D-Druck ausgebildet werden.

Einzelne oder mehrere der Werkstückträger 102 können nach Durchführung des Aufbauverfahrens, zusammen mit dem aufgebauten Werkstück, von der Basiseinheit 100 gelöst und anschließend mittels ihrer Einspannbolzen 104 in einer (nicht dargestellten) Werkzeugvorrichtung zur Durchführung einer, beispielsweise spanenden, Bearbeitung des aufgebauten Werkstücks fixiert und verriegelt werden.

Hierdurch kann ein an der Gesamt-Werkstücktragefläche 200 aufgebautes Werkstück in einem Folgeprozess beispielsweise konventionell weiterbearbeitet und/oder vermessen werden.

Durch die Aufteilung der Gesamt-Werkstücktragefläche 200 auf die Werkstücktrageflächen 178 einer Mehrzahl von modularen Werkstückträgern 102 kann eine beliebige Form der Gesamt-Werkstücktragefläche 200 aus verschiedenen Werkstücktrageflächen 178 verschiedener Werkstückträger 102, welche jeweils Segmente der Gesamt-Werkstücktragefläche 200 bilden, zusammengesetzt werden.

Die Werkstückträger 102 werden jeweils so auf die Deckplatte 110 der Basiseinheit 100 aufgesetzt, dass ihre Einspannbolzen 104 in jeweils eine Deckplatten-Durchtrittsöffnung 112 der Deckplatte 110 der Basiseinheit 100 eingreifen.

Dabei stimmen die Außendurchmesser der Zentrierbunde 184 der Einspannbolzen 104 einerseits und die Innendurchmesser der Deckplatten-Durchtrittsöffnungen 112 der Deckplatte 110 andererseits so präzise miteinander überein, dass eine Zentrierung der Einspannbolzen 104 in Bezug auf die Deckplatten-Durchtrittsöffnungen 112 erzielt wird.

Über die Geometrie der Einspannbolzen 104 an den Werkstückträgern 102 und die Geometrie der Deckplatten-Durchtrittsöffnungen 112 werden die Werkstückträger 102 bezüglich der Bewegungsrichtung 150 und bezüglich der Querrichtung 166 der Basiseinheit 100 präzise ausgerichtet.

Beim Aufsetzen der Werkstückträger 102 auf die Deckplatte 110 der Basiseinheit 100 befindet sich das Fixierelement 124 der Basiseinheit 100 in seiner in den Fig. 10 und 11 dargestellten Ruhestellung.

Mittels der Bewegungsvorrichtung 148 der Basiseinheit 100 wird das Fixierelement 124 in der Verriegelungsrichtung 202, welche parallel zu der Bewegungsrichtung 150 ausgerichtet ist, verschoben, um das Fixierelement 124 von der in den Fig. 10 und 11 dargestellten Ruhestellung in die in den Fig. 8 und 9 dargestellte Arbeitsstellung zu überführen.

Dies erfolgt dadurch, dass eine Bedienungsperson mittels eines Betätigungswerkzeugs, das an dem Kopf 156 der Schraube 152 der Bewegungsvorrichtung 148 angreift, die Schraube 152 so um deren Längsachse dreht, dass der mit dem Außengewinde der Schraube 152 in Eingriff stehende Mitnehmer 162 sich in der Verriegelungsrichtung 202 relativ zu dem Gehäuse 106 der Basiseinheit 100 verschiebt.

Da der Mitnehmer 162 mit dem Fixierelement 124 gekoppelt ist, wird das Fixierelement 124 dabei ebenfalls längs der Verriegelungsrichtung 202 verschoben.

Der Hub der Verschiebungsbewegung des Fixierelements 124 von der Ruhestellung in die Arbeitsstellung (oder von der Arbeitsstellung in die Ruhestellung) beträgt vorzugsweise mindestens 2,0 mm, insbesondere mindestens 3,0 mm, besonders bevorzugt mindestens 4,0 mm.

Bei dieser Bewegung des Fixierelements 124 kommen die Klemmrahmen 136 des Fixierelements 124, deren Fixierelement-Durchtrittsöffnungen 130 von jeweils einem Einspannbolzen 104 eines Werkstückträgers 102 durchsetzt werden, in Eingriff mit den Einspannbolzen 104 und drücken diese nach unten, in Richtung auf die Grundplatte 108 der Basiseinheit 100 zu, so dass die Einspannbolzen 104 noch tiefer in die Grundplatten-Durchtrittsöffnungen 118 eindringen.

Hierdurch werden die Werkstückträger 102 nach unten gegen die Oberseite 114 der Deckplatte 110 der Basiseinheit 100 gezogen, wodurch sie eine fest definierte Lage auf der Deckplatte 110 der Basiseinheit 100 einnehmen.

Um die Werkstückträger 102 wieder von der Basiseinheit 100 zu lösen, wird das Fixierelement 124 von der in den Fig. 8 und 9 dargestellten Arbeitsstellung in die in den Fig. 10 und 11 dargestellte Ruhestellung überführt, indem die Schraube 152 der Bewegungsvorrichtung 148 von der Bedienungsperson mittels eines geeigneten Betätigungswerkzeugs in einer Drehrichtung um die Längsachse der Schraube 152 gedreht wird, welche der Drehrichtung der Schraube 152 bei der Bewegung des Fixierelements 124 von der Ruhestellung in die Arbeitsstellung entgegengesetzt ist.

Dadurch wird das Fixierelement 124 in der Entriegelungsrichtung 204, welche der Verrieglungsrichtung 202 entgegengesetzt ist, von der in den Fig. 8 und 9 dargestellten Arbeitsstellung in die in den Fig. 10 und 11 dargestellte Ruhestellung verschoben.

In der Ruhestellung des Fixierelements 124 sind die Einspannbolzen 104 der Werkstückträger 102 weder durch Formschluss noch durch Kraftschluss an der Basiseinheit 100 fixiert, so dass die Werkstückträger 102 von der Deckplatte 110 der Basiseinheit 100 abgenommen werden können, wobei die Einspannbolzen 104 der Werkstückträger 102 aus der jeweils zugeordneten Grundplatten-Durchtrittsöffnung 118, der jeweils zugeordneten Fixierelement-Durchtrittsöffnung 130 und der jeweils zugeordneten Deckplatten-Durchtrittsöffnung 112 heraus gelangen.

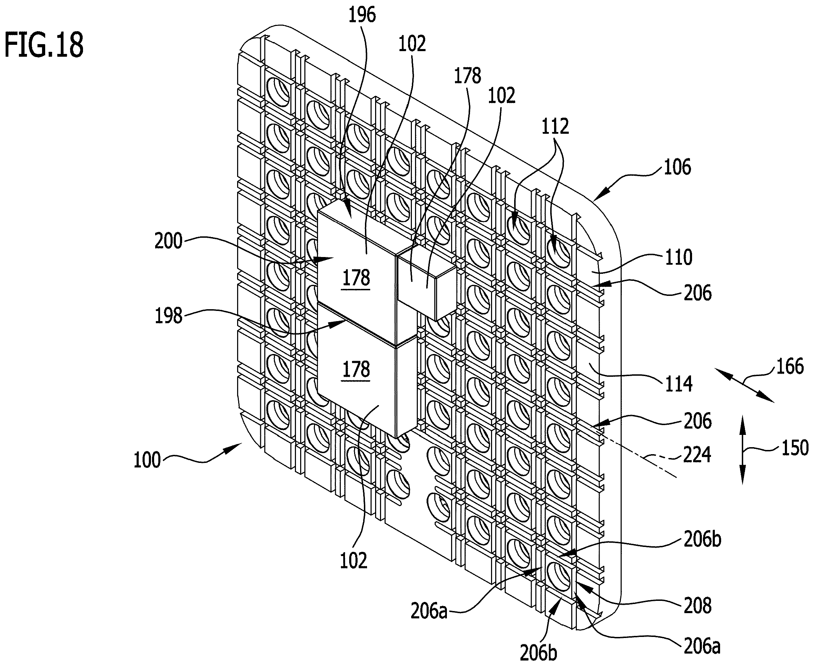

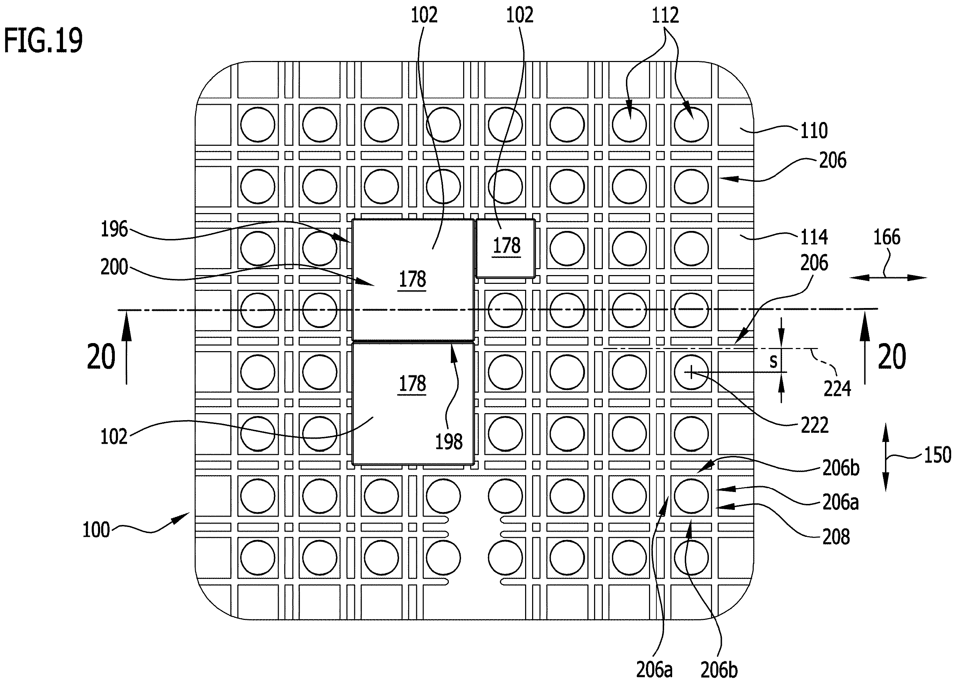

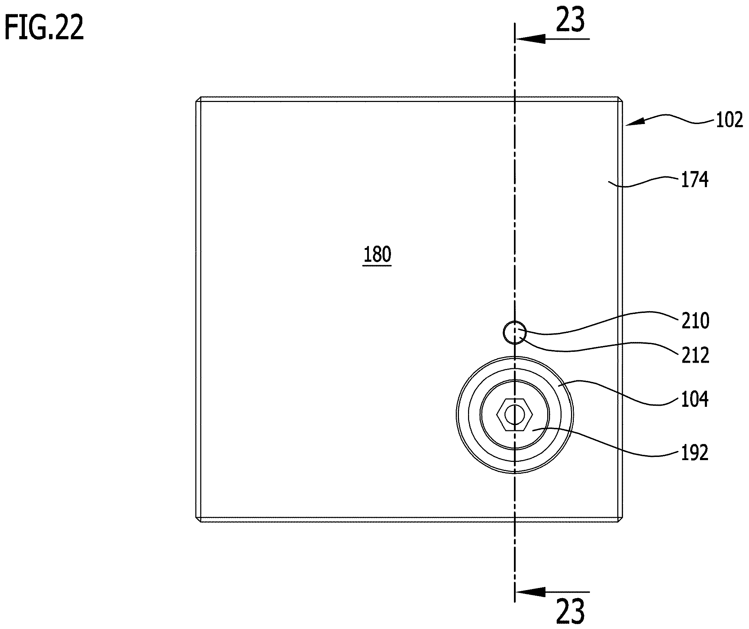

Eine in den Fig. 18 bis 23 dargestellte zweite Ausführungsform einer Kombination aus einer Basiseinheit 100 zum lösbaren Fixieren von Werkstückträgern 102 und mehreren solchen Werkstückträgern 102 unterscheidet sich von der in den Fig. 1 bis 17 dargestellten ersten Ausführungsform dadurch, dass die Deckplatte 110 der Basiseinheit 100 nicht im Wesentlichen eben ist, sondern mit Verdrehsicherungsnuten 206 versehen ist, welche an der Oberseite 114 der Deckplatte 110 ausgebildet sind.

Dabei sind jeder Deckplatten-Durchtrittsöffnung 112 jeweils zwei erste Verdrehsicherungsnuten 206a zugeordnet, welche sich auf einander gegenüberliegenden Seiten der jeweiligen Deckplatten-Durchtrittsöffnung 112 parallel zu der Bewegungsrichtung 150 der Basiseinheit 100 erstrecken, und jeweils zwei zweite Verdrehsicherungsnuten 206b zugeordnet, welche sich auf einander gegenüberliegenden Seiten der jeweiligen Deckplatten-Durchtrittsöffnung 112 parallel zu der Querrichtung 166 der Basiseinheit 100 erstrecken.

Auf diese Weise sind (bis auf einige Deckplatten-Durchtrittsöffnungen 112, die in der Nähe der Schraube 152 der Bewegungsvorrichtung 148 angeordnet sind) nahezu alle Deckplatten-Durchtrittsöffnungen 112 von einer rechteckigen, vorzugsweise quadratischen, Verdrehsicherungsnutenstruktur 208 umgeben, wobei die Verdrehsicherungsnutenstruktur 208 jeweils zwei Abschnitte von ersten Verdrehsicherungsnuten 206a und zwei Abschnitte von zweiten Verdrehsicherungsnuten 206b umfasst.

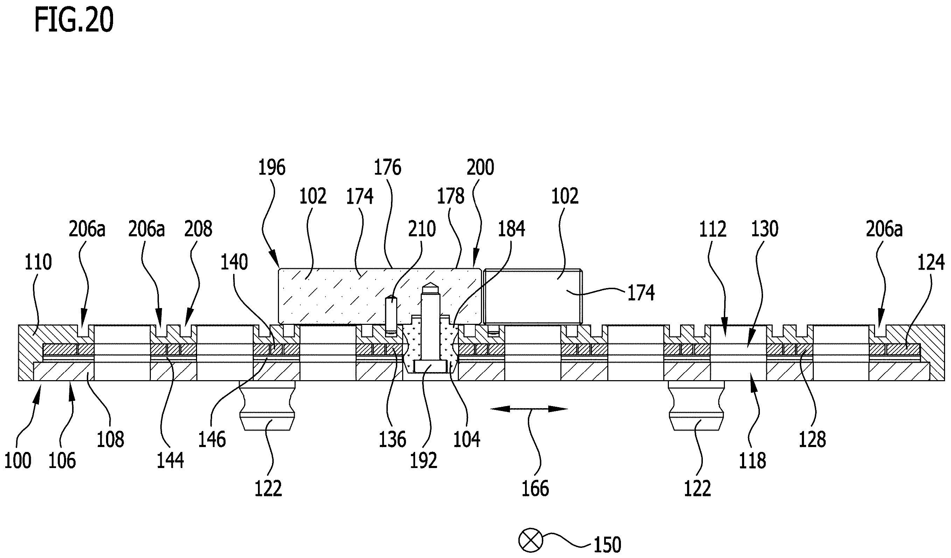

Wie am besten aus Fig. 20 zu ersehen ist, wirken die Verdrehsicherungsnuten 206 der Basiseinheit 100 mit Verdrehsicherungselementen 210 zusammen, welche an den Werkstückträgern 102 angeordnet sind.

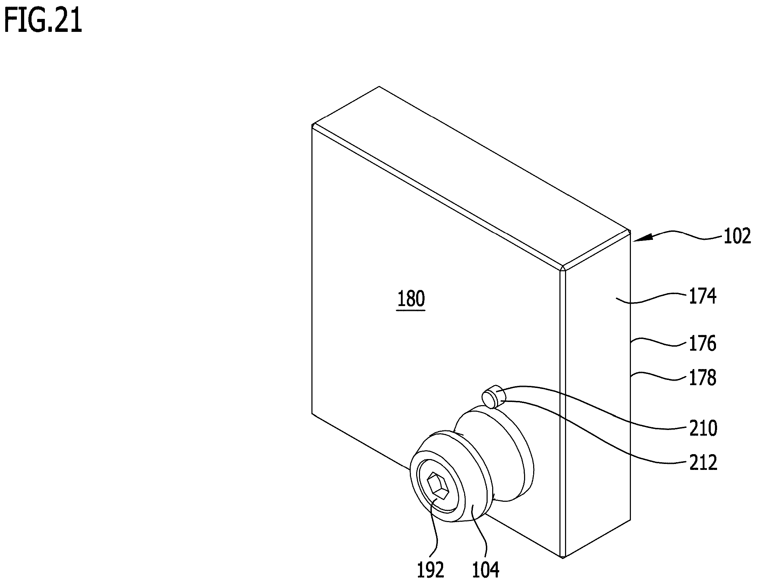

In den Fig. 21 bis 23 ist beispielhaft ein Werkstückträger 102 mit einer quadratischen Werkstücktragefläche 178 dargestellt.

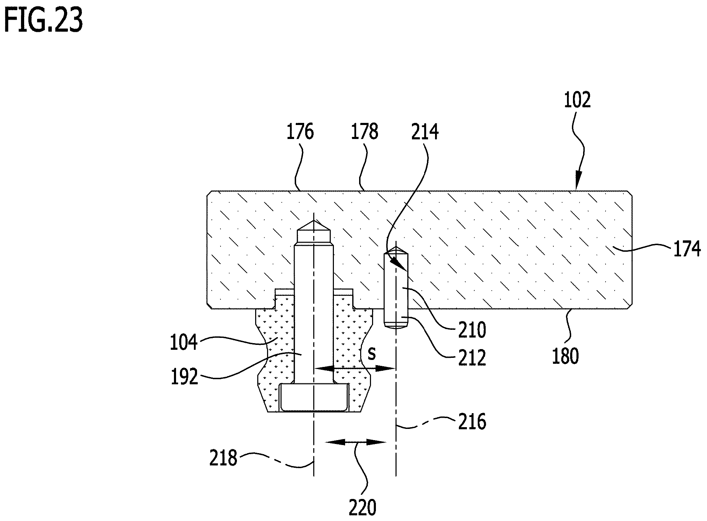

An der Unterseite 180 dieses Werkstückträgers 102 ist nur ein einziger Einspannbolzen 104 angeordnet, und diesem Einspannbolzen 104 ist ein Verdrehsicherungselement 110 zugeordnet, welches beispielsweise als ein Gewindestift 212 ausgebildet sein kann, der in ein Gewindesackloch 214 an der Unterseite 180 des Grundkörpers 174 des Werkstückträgers 102 eingedreht ist (siehe Fig. 23).

Die Längsmittelachse 216 des Verdrehsicherungselements 210 ist gegenüber der Längsmittelachse 218 des jeweils zugeordneten Einspannbolzens 104 in einer Versatzrichtung 220 versetzt, welche vorzugsweise parallel zu einer Kante des Grundkörpers 174 des Werkstückträgers 102, besonders bevorzugt parallel zu einer Kante der Werkstücktragefläche 178 des Werkstückträgers, ausgerichtet ist.

Der Abstand s zwischen der Längsmittelachse 216 des Verdrehsicherungselements 210 und der Längsmittelachse 218 des Einspannbolzens 104 entspricht dem Abstand des Mittelpunkts 222 einer Deckplatten-Durchtrittsöffnung 112 von der Mittelachse 224 einer der betreffenden Deckplatten-Durchtrittsöffnung 112 benachbarten Verdrehsicherungsnut 206. Hierdurch ist gewährleistet, dass der Werkstückträger 102 so auf die (profilierte) Oberseite 114 der Deckplatte 110 der Basiseinheit 100 aufgesetzt werden kann, dass der Einspannbolzen 104 des Werkstückträgers 102 zentriert in einer der Deckplatten-Durchtrittsöffnungen 112 aufgenommen wird und gleichzeitig das Verdrehsicherungselement 210 in eine der der betreffenden Deckplatten-Durchtrittsöffnung 112 benachbarten Verdrehsicherungsnuten 206 eingreift.

Da die Versatzrichtung 220, längs welcher das Verdrehsicherungselement 210 gegenüber dem Einspannbolzen 104 versetzt ist, zu einer Kante des Grundkörpers 174 des Werkstückträgers 102 parallel ist, ist dabei gewährleistet, dass die Kanten des quaderförmigen Grundkörpers 174 des Werkstückträgers 102 alle parallel zu einer der Verdrehsicherungsnuten 206 und damit alle parallel zu der Bewegungsrichtung 150 oder parallel zu der Querrichtung 166 der Basiseinheit 100 ausgerichtet sind.

Anders als bei der in den Fig. 1 bis 17 dargestellten ersten Ausführungsform einer Kombination aus einer Basiseinheit 100 und mehreren Werkstückträgern 102 ist bei der in den Fig. 18 bis 23 dargestellten zweiten Ausführungsform einer solchen Kombination für die Verdrehsicherung der Werkstückträger 102 relativ zu der Deckplatte 110 der Basiseinheit 100 nur jeweils ein Einspannbolzen 104 und ein Verdrehsicherungselement 210 erforderlich, während bei der ersten Ausführungsform für eine Verdrehsicherung mindestens zwei Einspannbolzen 104 an jedem Werkstückträger 102 vorhanden sein müssen.

Bei der zweiten Ausführungsform ist daher die Anzahl der für eine positionsgenaue und verdrehsichere Anordnung der Werkstückträger 102 an der Basiseinheit 100 erforderliche Anzahl von Einspannbolzen 104 deutlich reduziert.

Im Übrigen stimmt die in den Fig. 18 bis 23 dargestellte zweite Ausführungsform einer Kombination aus einer Basiseinheit 100 und mehreren Werkstückträgern 102 hinsichtlich Aufbau, Funktion und Herstellungsweise mit der in den Fig. 1 bis 17 dargestellten ersten Ausführungsform überein, auf deren vorstehende Beschreibung insoweit Bezug genommen wird.

## Patentansprüche

1. Basiseinheit zum lösbaren Fixieren von Werkstückträgern (102), welche jeweils mindestens einen Einspannbolzen (104) umfassen,
wobei die Basiseinheit Folgendes umfasst:
eine Grundplatte (108),
eine Deckplatte (110), welche mit Deckplatten-Durchtrittsöffnungen (112) versehen ist, durch die jeweils ein Einspannbolzen (104) eines Werkstückträgers (102) hindurchtreten kann,
ein Fixierelement (124), mittels welchem mindestens ein Einspannbolzen (104) eines Werkstückträgers (102) an der Basiseinheit (100) fixierbar ist, wenn das Fixierelement (124) sich in einer Arbeitsstellung befindet,
und
eine Bewegungsvorrichtung (148) zum Bewegen des Fixierelements (124) von einer Ruhestellung in die Arbeitsstellung und/oder von der Arbeitsstellung in die Ruhestellung,
**dadurch gekennzeichnet,**
**dass** das Fixierelement (124) mit Fixierelement-Durchtrittsöffnungen (130) versehen ist, durch die jeweils ein Einspannbolzen (104) eines Werkstückträgers (102) hindurchtreten kann,
wobei das Fixierelement (124) federnd gehaltene Klemmrahmen (136) umfasst, an denen jeweils mindestens eine Fixierelement-Durchtrittsöffnung (130) angeordnet ist,
wobei jeder Klemmrahmen (136) mittels eines oder mehrerer federnd elastischer Arme (138) an einem Grundkörper (140) des Fixierelements (124) gehalten ist.

2. Basiseinheit nach Anspruch 1, **dadurch gekennzeichnet, dass** die Fixierelement-Durchtrittsöffnungen (130) jeweils eine Fase oder jeweils einen Randbereich (132) mit einem kleineren Krümmungsradius und einen Randbereich (134) mit einem größeren Krümmungsradius aufweisen.

3. Basiseinheit nach einem der Ansprüche 1 oder 2, **dadurch gekennzeichnet, dass** das Fixierelement (124) aus einem flachen Ausgangsmaterial hergestellt ist und die Fixierelement-Durchtrittsöffnungen (130) aus dem flachen Ausgangsmaterial herausgetrennt sind.

4. Basiseinheit nach einem der Ansprüche 1 bis 3, **dadurch gekennzeichnet, dass** die Mittelpunkte (116) der Deckplatten-Durchtrittsöffnungen (112) an den Gitterpunkten eines regulären Gitters angeordnet sind.

5. Basiseinheit nach einem der Ansprüche 1 bis 4, **dadurch gekennzeichnet, dass** mittels der Deckplatten-Durchtrittsöffnungen (112) jeweils ein Einspannbolzen (104) eines Werkstückträgers (102) zentriert ist, wenn der Einspannbolzen (104) sich durch die betreffende Deckplatten-Durchtrittsöffnung (112) hindurch erstreckt.

6. Basiseinheit nach einem der Ansprüche 1 bis 5, **dadurch gekennzeichnet, dass** die Bewegungsvorrichtung (148) einen mechanischen, pneumatischen, hydraulischen oder elektrischen Antrieb für die Bewegung des Fixierelements (124) von der Ruhestellung in die Arbeitsstellung und/oder von der Arbeitsstellung in die Ruhestellung umfasst.

7. Basiseinheit nach einem der Ansprüche 1 bis 6, **dadurch gekennzeichnet**, das die Bewegungsvorrichtung (148) eine Schraube (152) mit einem in axialer Richtung der Schraube (152) relativ zu der Deckplatte (110) und/oder relativ zu der Grundplatte (108) der Basiseinheit (100) ortsfest gelagerten Kopf (156) umfasst.

8. Basiseinheit nach einem der Ansprüche 1 bis 7, **dadurch gekennzeichnet, dass** die Bewegungsvorrichtung (148) einen Mitnehmer (162) umfasst, welcher mit dem Fixierelement (124) gekoppelt ist und mit einem Antriebselement (172) der Bewegungsvorrichtung (148) in Eingriff steht, wobei der Mitnehmer (162) vorzugsweise ein Gewinde aufweist.

9. Basiseinheit nach einem der Ansprüche 1 bis 8, **dadurch gekennzeichnet, dass** die Basiseinheit (100) ein elastisch verformbares Andrückelement (144) zum Andrücken des Fixierelements (124) gegen die Deckplatte (110) umfasst.

10. Basiseinheit nach einem der Ansprüche 1 bis 9, **dadurch gekennzeichnet, dass** die Grundplatte (108) Ausnehmungen oder Grundplatten-Durchtrittsöffnungen (118) zur Aufnahme jeweils eines Einspannbolzens (104) eines Werkstückträgers (102) umfasst.

11. Basiseinheit nach einem der Ansprüche 1 bis 10, **dadurch gekennzeichnet, dass** die Basiseinheit (100) mindestens einen Einspannbolzen (122) zum lösbaren Fixieren der Basiseinheit (100) an einem Untergrund oder an einer Einspannvorrichtung umfasst.

12. Kombination aus einer Basiseinheit (100) nach einem der Ansprüche 1 bis 11 und mindestens einem Werkstückträger (102), welcher mindestens einen Einspannbolzen (104) umfasst.

13. Kombination nach Anspruch 12, **dadurch gekennzeichnet, dass** die Kombination mehrere Werkstückträger (102) umfasst, welche derart lösbar an der Basiseinheit (100) fixierbar sind, dass sie zusammen eine ununterbrochene oder nur durch schmale Spalte (198) unterbrochene Gesamt-Werkstücktragefläche (200) bilden.

14. Kombination nach einem der Ansprüche 12 oder 13, **dadurch gekennzeichnet, dass** mindestens einer der Werkstückträger (102) ein Verdrehsicherungselement (210) umfasst.

## Claims

1. Base unit for releasably fixing workpiece supports (102), which each comprise at least one clamping bolt (104),
wherein the base unit comprises the following:
a base plate (108),
a cover plate (110), which is provided with cover plate through-openings (112) through each of which a clamping bolt (104) of a workpiece support (102) is able to pass,
a fixing element (124), by means of which at least one clamping bolt (104) of a workpiece support (102) is fixable to the base unit (100) when the fixing element (124) is located in a working position, and
a movement device (148) for moving the fixing element (124) from a rest position into the working position and/or from the working position into the rest position,
**characterized in that**
the fixing element (124) is provided with fixing element through-openings (130) through each of which a clamping bolt (104) of a workpiece support (102) is able to pass,
wherein the fixing element (124) comprises resiliently held clamping frames (136) on each of which at least one fixing element through-opening (130) is arranged,
wherein each clamping frame (136) is held on a basic body (140) of the fixing element (124) by means of one or more resiliently elastic arms (138).

2. Base unit in accordance with Claim 1, **characterized in that** the fixing element through-openings (130) each comprise a chamfer or each comprise a rim region (132) with a smaller radius of curvature and a rim region (134) with a greater radius of curvature.

3. Base unit in accordance with either of Claims 1 or 2, **characterized in that** the fixing element (124) is produced from a flat starting material and the fixing element through-openings (130) are separated out of the flat starting material.

4. Base unit in accordance with any one of Claims 1 to 3, **characterized in that** the midpoints (116) of the cover plate through-openings (112) are arranged at the grid points of a regular grid.

5. Base unit in accordance with any one of Claims 1 to 4, **characterized in that** a clamping bolt (104) of a workpiece support (102) is centered by means of each of the cover plate through-openings (112) when the clamping bolt (104) extends through the respective cover plate through-opening (112).

6. Base unit in accordance with any one of Claims 1 to 5, **characterized in that** the movement device (148) comprises a mechanical, pneumatic, hydraulic, or electric drive for the movement of the fixing element (124) from the rest position into the working position and/or from the working position into the rest position.

7. Base unit in accordance with any one of Claims 1 to 6, **characterized in that** the movement device (148) comprises a screw (152) with a head (156) that is stationarily mounted in the axial direction of the screw (152) relative to the cover plate (110) and/or relative to the base plate (108) of the base unit (100).

8. Base unit in accordance with any one of Claims 1 to 7, **characterized in that** the movement device (148) comprises a driver (162), which is coupled to the fixing element (124) and is in engagement with a drive element (172) of the movement device (148), wherein the driver (162) preferably comprises a thread.

9. Base unit in accordance with any one of Claims 1 to 8, **characterized in that** the base unit (100) comprises an elastically deformable pressing element (144) for pressing the fixing element (124) against the cover plate (110).

10. Base unit in accordance with any one of Claims 1 to 9, **characterized in that** the base plate (108) comprises recesses or base plate through-openings (118) for each accommodating a clamping bolt (104) of a workpiece support (102).

11. Base unit in accordance with any one of Claims 1 to 10, **characterized in that** the base unit (100) comprise at least one clamping bolt (122) for releasably fixing the base unit (100) to a supporting base or to a clamping device.

12. Combination of a base unit (100) in accordance with any one of Claims 1 to 11 and at least one workpiece support (102) that comprises at least one clamping bolt (104).

13. Combination in accordance with Claim 12, **characterized in that** the combination comprises a plurality of workpiece supports (102), which are releasably fixable to the base unit (100) in such a way that they together form an uninterrupted total workpiece support face (200) or a total workpiece support face (200) that is interrupted only by narrow gaps (198).

14. Combination in accordance with either of Claims 12 or 13, **characterized in that** at least one of the workpiece supports (102) comprises an anti-rotation element (210).

## Revendications

1. Unité de base pour la fixation amovible de porte-pièces (102), qui comprennent chacun au moins un boulon de serrage (104),
dans laquelle l'unité de base comprend :
une plaque de fond (108),
une plaque de recouvrement (110) qui est pourvue d'ouvertures de passage de plaque de recouvrement (112) à travers lesquelles peut passer respectivement un boulon de serrage (104) d'un porte-pièce (102),
un élément de fixation (124) au moyen duquel au moins un boulon de serrage (104) d'un porte-pièce (102) peut être fixé sur l'unité de base (100) lorsque l'élément de fixation (124) se trouve dans une position de travail, et
un dispositif de déplacement (148) pour déplacer l'élément de fixation (124) d'une position de repos dans la position de travail et/ou de la position de travail dans la position de repos,
**caractérisée en ce**
**que** l'élément de fixation (124) est pourvu d'ouvertures de passage d'élément de fixation (130) à travers lesquelles un boulon de serrage (104) d'un porte-pièce (102) peut passer,
dans laquelle l'élément de fixation (124) comprend des cadres de serrage (136), maintenus par ressort, sur lesquels est disposée respectivement au moins une ouverture de passage d'élément de fixation (130),
dans laquelle chaque cadre de serrage (136) est maintenu au moyen d'un ou de plusieurs bras élastiques à ressort (138) sur un corps de fond (140) de l'élément de fixation (124).

2. Unité de base selon la revendication 1, **caractérisée en ce que** les ouvertures de passage d'élément de fixation (130) présentent chacune un chanfrein ou chacune une zone de bord (132) avec un rayon de courbure plus petit et une zone de bord (134) avec un rayon de courbure plus grand.

3. Unité de base selon l'une quelconque des revendications 1 ou 2, **caractérisée en ce que** l'élément de fixation (124) est fabriqué à partir d'un matériau de départ plat et les ouvertures de passage d'élément de fixation (130) sont séparées du matériau de départ plat.

4. Unité de base selon l'une quelconque des revendications 1 à 3, **caractérisée en ce que** les points centraux (116) des ouvertures de passage de plaque de recouvrement (112) sont disposés sur les points de grille d'une grille régulière.

5. Unité de base selon l'une quelconque des revendications 1 à 4, **caractérisée en ce qu'**un boulon de serrage (104) d'un porte-pièce (102) est respectivement centré au moyen des ouvertures de passage de plaque de recouvrement (112) lorsque le boulon de serrage (104) s'étend à travers l'ouverture de passage de plaque de recouvrement (112) concernée.

6. Unité de base selon l'une quelconque des revendications 1 à 5, **caractérisée en ce que** le dispositif de déplacement (148) comprend un entraînement mécanique, pneumatique, hydraulique ou électrique pour le déplacement de l'élément de fixation (124) de la position de repos dans la position de travail et/ou de la position de travail dans la position de repos.

7. Unité de base selon l'une quelconque des revendications 1 à 6, **caractérisée en ce que** le dispositif de déplacement (148) comprend une vis (152) avec une tête (156) montée de manière stationnaire dans la direction axiale de la vis (152) par rapport à la plaque de recouvrement (110) et/ou par rapport à la plaque de fond (108) de l'unité de base (100).

8. Unité de base selon l'une quelconque des revendications 1 à 7, **caractérisée en ce que** le dispositif de déplacement (148) comprend un entraîneur (162) qui est couplé à l'élément de fixation (124) et est en prise avec un élément d'entraînement (172) du dispositif de déplacement (148), dans laquelle l'entraîneur (162) présente de préférence un filetage.

9. Unité de base selon l'une quelconque des revendications 1 à 8, **caractérisée en ce que** l'unité de base (100) comprend un élément de pression (144) élastiquement déformable pour presser l'élément de fixation (124) contre la plaque de recouvrement (110).

10. Unité de base selon l'une quelconque des revendications 1 à 9, **caractérisée en ce que** la plaque de fond (108) comprend des évidements ou des ouvertures de passage de plaque de fond (118) pour recevoir respectivement un boulon de serrage (104) d'un porte-pièce (102).

11. Unité de base selon l'une quelconque des revendications 1 à 10, **caractérisée en ce que** l'unité de base (100) comprend au moins un boulon de serrage (122) pour la fixation amovible de l'unité de base (100) sur un support ou sur un dispositif de serrage.

12. Combinaison d'une unité de base (100) selon l'une quelconque des revendications 1 à 11 et d'au moins un porte-pièce (102), qui comprend au moins un boulon de serrage (104).

13. Combinaison selon la revendication 12, **caractérisée en ce que** la combinaison comprend plusieurs porte-pièces (102) qui peuvent être fixés de manière amovible sur l'unité de base (100) de telle manière qu'ils forment ensemble une surface totale de support de pièce (200) ininterrompue ou seulement interrompue par des fentes étroites (198).

14. Combinaison selon l'une quelconque des revendications 12 ou 13, **caractérisée en ce qu'**au moins un des porte-pièces (102) comprend un élément de blocage anti-rotation (210).
